# EUROPEAN PATENT APPLICATION

(11) **EP 4 560 345 A2**
(43) Date of publication of application: **28.05.2025**
(21) Application number: 25169537.5
(22) Date of filing: 30.12.2022
(51) Int. Cl.: G01S 5/00

(54) **METHODS AND APPARATUS FOR SYNCHRONIZATION FOR SIDELINK POSITIONING AND SIDELINK COMMUNICATION SESSIONS**

(30) Priority: 08.03.2022 GR 20220100217
(62) Divisional of application: 22856974.5
(71) Applicant: QUALCOMM Incorporated, San Diego, CA 92121-1714 (US)
(72) Inventor: MANOLAKOS, Alexandros, San Diego, 92121-1714 (US); KUMAR, Mukesh, San Diego, 92121-1714 (US); YERRAMALLI, Srinivas, San Diego, 92121-1714 (US)
(74) Representative: Reddie & Grose LLP

(57) **Abstract**

Sidelink based positioning of a user equipment (UE) using multiple sidelink UEs as anchor nodes is based on the synchronization status of available sidelink UEs. The synchronization reference of each available sidelink UE may be determined, for example, and sidelink UEs are selected for sidelink positioning based on their synchronization references. For example, sidelink UEs that have a common synchronization source and/or have higher synchronization priority level may be selected for sidelink positioning over other sidelink UEs. Additionally, the positioning method used for the sidelink positioning session may be selected based on the synchronization quality of each of the sidelink UEs. If each sidelink UE has a synchronization quality within a range, a time synchronization sensitive positioning method may be selected, but if one or more sidelink UEs have a synchronization quality outside the range, a positioning method that is less time synchronization sensitive may be selected.

## Description

### BACKGROUND

### Field

The subject matter disclosed herein relates to wireless communications systems, and more particularly to systems, methods, and devices that support positioning.

### Relevant Background

Wireless communication systems are widely deployed to provide various telecommunication services such as telephony, video, data, messaging, positioning, and broadcasts. Typical wireless communication systems may employ multiple-access technologies capable of supporting communication with multiple users by sharing available system resources (e.g., bandwidth, transmit power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems.

In some examples, a wireless multiple-access communication system may include a number of base stations, each simultaneously supporting communication for multiple communication devices, otherwise known as user equipment (UEs). In LTE or LTE-A network, a set of one or more base stations may define an e NodeB (eNB). In other examples (e.g., in a next generation or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., a new radio base station (NR BS), a new radio node-B (NR NB), a network node, 5G NB, gNB, etc.). A base station or DU may communicate with a set of UEs on downlink channels (e.g., for transmissions from a base station or to a UE) and uplink channels (e.g., for transmissions from a UE to a base station or distributed unit). Additionally, UEs may communicate directly with each other using sidelink channels.

The location of UE may be useful or essential to a number of applications including emergency calls, navigation, direction finding, asset tracking and Internet service. The location of a UE may be estimated based on information gathered from various systems. In a cellular network implemented according to LTE or 5G NR, for example, a base station may send downlink reference signals with which positioning measurements are performed by a UE and/or the UE may send uplink reference signals with which positioning measurements are performed by the base stations. Additionally, sidelink reference signals may be transmitted by UEs and positioning measurements performed by a UE. The UE may compute an estimate of its own location using the positioning measurements in UE-based positioning or may send the positioning measurements to a network entity, e.g., location server, which may compute the UE location based on the positioning measurements in UE-assisted positioning.

### SUMMARY

Sidelink based positioning of a user equipment (UE) using multiple sidelink UEs as anchor nodes is based on the synchronization status of available sidelink UEs. The synchronization reference of each available sidelink UE may be determined, for example, and sidelink UEs are selected for sidelink positioning based on their synchronization references. For example, sidelink UEs that have a common synchronization source and/or have higher synchronization priority level may be selected for sidelink positioning over other sidelink UEs. Additionally, the positioning method used for the sidelink positioning session may be selected based on the synchronization quality of each of the sidelink UEs. If each sidelink UE has a synchronization quality within a range, a time synchronization sensitive positioning method may be selected, but if one or more sidelink UEs have a synchronization quality outside the range, a positioning method that is less time synchronization sensitive may be selected.

In one implementation, a method performed by a user equipment (UE) for supporting sidelink positioning of the UE, includes detecting one or more sidelink UEs that are available for sidelink positioning; determining a synchronization reference of each of the one or more sidelink UEs; and selecting sidelink UEs for the sidelink positioning based on the synchronization reference associated with each of the one or more sidelink UEs.

In one implementation, a user equipment (UE) configured for supporting sidelink positioning of the UE, includes a wireless transceiver configured to communicate with entities in a wireless network; at least one memory; and at least one processor coupled to the wireless transceiver and the at least one memory, wherein the at least one processor is configured to: detect, via the wireless transceiver, one or more sidelink UEs that are available for sidelink positioning; determine, via the wireless transceiver, a synchronization reference of each of the one or more sidelink UEs; and select sidelink UEs for the sidelink positioning based on the synchronization reference associated with each of the one or more sidelink UEs.

In one implementation, a user equipment (UE) configured for supporting sidelink positioning of the UE, includes means for detecting one or more sidelink UEs that are available for sidelink positioning; means for determining a synchronization reference of each of the one or more sidelink UEs; and means for selecting sidelink UEs for the sidelink positioning based on the synchronization reference associated with each of the one or more sidelink UEs.

In one implementation, a non-transitory storage medium including program code stored thereon, the program code is operable to configure at least one processor in a user equipment (UE) for supporting sidelink positioning of the UE, the program code comprising instructions to: detect one or more sidelink UEs that are available for sidelink positioning; determine a synchronization reference of each of the one or more sidelink UEs; and select sidelink UEs for the sidelink positioning based on the synchronization reference associated with each of the one or more sidelink UEs.

In one implementation, a method performed by a user equipment (UE) for supporting sidelink positioning of the UE, includes detecting one or more sidelink UEs that are available for sidelink positioning, wherein each sidelink UE is synchronized with a synchronization source; determining a synchronization quality for each of the one or more sidelink UEs; and selecting a positioning method for the sidelink positioning with the one or more sidelink UEs based on the synchronization quality for each of the one or more sidelink UEs.

In one implementation, a user equipment (UE) configured for supporting sidelink positioning of the UE, includes a wireless transceiver configured to communicate with entities in a wireless network; at least one memory; and at least one processor coupled to the wireless transceiver and the at least one memory, wherein the at least one processor is configured to: detect one or more sidelink UEs that are available for sidelink positioning, wherein each sidelink UE is synchronized with a synchronization source; determine a synchronization quality for each of the one or more sidelink UEs; and select a positioning method for the sidelink positioning with the one or more sidelink UEs based on the synchronization quality for each of the one or more sidelink UEs.

In one implementation, a user equipment (UE) configured for supporting sidelink positioning of the UE, includes means for detecting one or more sidelink UEs that are available for sidelink positioning, wherein each sidelink UE is synchronized with a synchronization source; means for determining a synchronization quality for each of the one or more sidelink UEs; and means for selecting a positioning method for the sidelink positioning with the one or more sidelink UEs based on the synchronization quality for each of the one or more sidelink UEs.

In one implementation, a non-transitory storage medium including program code stored thereon, the program code is operable to configure at least one processor in a user equipment (UE) for supporting sidelink positioning of the UE, the program code comprising instructions to: detect one or more sidelink UEs that are available for sidelink positioning, wherein each sidelink UE is synchronized with a synchronization source; determine a synchronization quality for each of the one or more sidelink UEs; and select a positioning method for the sidelink positioning with the one or more sidelink UEs based on the synchronization quality for each of the one or more sidelink UEs.

### BRIEF DESCRIPTION OF THE DRAWINGS

FIG. 1A shows an architecture of communication system including a number of UEs, a Radio Access Network (RAN), and a 5G Core Network (5GC).
FIG. 1B shows an architecture diagram of an RAN node that may be within the RAN in FIG. 1A
FIG. 2 illustrates an environment showing synchronization references (SyncRef UEs) with different priority levels.
FIG. 3 illustrates an environment showing triggering of sidelink synchronization signal transmissions by a UE.
FIG. 4 illustrates an environment with a target UE selecting sidelink UEs for sidelink positioning based on the synchronization reference of the sidelink UEs.
FIG. 5 illustrates an environment showing a SyncRef UE transmitting sidelink synchronization signals to sidelink UEs.
FIG. 6 illustrates an environment showing the use of multiple synchronization configurations for positioning and data transmission.
FIG. 7 is a signal flow illustrating signaling between sidelink UEs for sidelink positioning that is based on the synchronization status of available sidelink UEs.
FIG. 8 illustrates an environment with a target UE selecting sidelink UEs in an industrial internet of things (IIOT) network for sidelink positioning based on use of a common clock.
FIG. 9 shows a schematic block diagram illustrating certain exemplary features of a UE that is configured to support sidelink positioning, as discussed herein.
FIG. 10 shows a flowchart for an exemplary method performed by a UE to support sidelink positioning of the UE, in a manner consistent with disclosed implementation.
FIG. 11 shows a flowchart for an exemplary method performed by a UE to support sidelink positioning of the UE, in a manner consistent with disclosed implementation.

Elements are indicated by numeric labels in the figures with like numbered elements in different figures representing the same element or similar elements. Different instances of a common element are indicated by following a numeric label for the common element with a distinct numeric suffix. In this case, a reference to the numeric label without a suffix indicates any instance of the common element.

### DETAILED DESCRIPTION

Techniques and apparatus are discussed herein for sidelink positioning of a user equipment (UE) using a multiple sidelink UEs as anchor nodes based on the synchronization status of available sidelink UEs. The synchronization status, for example, may include the synchronization reference used by each available sidelink UE, which may be determined which sidelink UEs are selected to participate in the sidelink based positioning session. For example, sidelink UEs that have a common synchronization source and/or have higher synchronization priority level may be selected for sidelink positioning over other sidelink UEs. In another example, the synchronization status may include the synchronization quality of each sidelink UE, which may be used to determine the positioning method used for the sidelink positioning session. The synchronization quality, for example, may be based on a signal strength measurement or a synchronization quality measurement, or a time or arrival (TOA) measurement quality of reference signals. A time synchronization sensitive positioning method, for example, may be selected if each sidelink UE has a synchronization quality within a predetermined range, and less time synchronization sensitive positioning methods may be selected if one or more sidelink UEs has a synchronization quality that is outside that predetermined range.

The description may refer to sequences of actions to be performed, for example, by elements of a computing device. Various actions described herein can be performed by specific circuits (e.g., an application specific integrated circuit (ASIC)), by program instructions being executed by one or more processors, or by a combination of both. Sequences of actions described herein may be embodied within a non-transitory computer-readable medium having stored thereon a corresponding set of computer instructions that upon execution would cause an associated processor to perform the functionality described herein. Thus, the various aspects described herein may be embodied in a number of different forms, all of which are within the scope of the disclosure, including claimed subject matter.

As used herein, the terms "user equipment" (UE) and "base station" are not specific to or otherwise limited to any particular Radio Access Technology (RAT), unless otherwise noted. In general, such UEs may be any wireless communication device (e.g., a mobile phone, router, tablet computer, laptop computer, tracking device, Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, WiFi networks (e.g., based on IEEE 802.11, etc.) and so on.

A base station may operate according to one of several RATs in communication with UEs depending on the network in which it is deployed, and may be alternatively referred to as an Access Point (AP), a Network Node, a NodeB, an evolved NodeB (eNB), a general Node B (gNodeB, gNB), etc. In addition, in some systems a base station may provide purely edge node signaling functions while in other systems it may provide additional control and/or network management functions.

UEs may be embodied by any of a number of types of devices including but not limited to printed circuit (PC) cards, compact flash devices, external or internal modems, wireless or wireline phones, smartphones, tablets, tracking devices, asset tags, and so on. A communication link through which UEs can send signals to a RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). A communication link through which UEs can send signals to other UEs is called a sidelink channel. As used herein the term traffic channel (TCH) can refer to either an uplink / reverse or downlink / forward or sidelink traffic channel.

As used herein, the term "cell" or "sector" may correspond to one of a plurality of cells of a base station, or to the base station itself, depending on the context. The term "cell" may refer to a logical communication entity used for communication with a base station (for example, over a carrier), and may be associated with an identifier for distinguishing neighboring cells (for example, a physical cell identifier (PCID), a virtual cell identifier (VCID)) operating via the same or a different carrier. In some examples, a carrier may support multiple cells, and different cells may be configured according to different protocol types (for example, machine-type communication (MTC), narrowband Internet-of-Things (NB-IoT), enhanced mobile broadband (eMBB), or others) that may provide access for different types of devices. In some examples, the term "cell" may refer to a portion of a geographic coverage area (for example, a sector) over which the logical entity operates.

Standardization of cellular systems, such as the Fifth Generation (5G) or New Radio (NR) network system, is ongoing in the 3rd Generation Partnership Project (3GPP). The 3GPP Release 16 and Release 17, for example, have introduced standardization and support of several techniques enabling and enhancing positioning in cellular systems. By way of example, RAT-dependent positioning systems that have been undergoing standardization include Enhanced Cell ID (E-CID) (using Received Signal Strength (RSS) and Round Trip Time (RTT) and optionally using Angle of Arrival (AoA)), downlink (DL) positioning, such as Observed Time Difference of Arrival (OTDOA), uplink (UL) positioning, such as Uplink Time Difference of Arrival (UTDOA). RAT-independent positioning systems that have been undergoing standardization include Enhanced Global Navigation Satellite System (GNSS), and other technologies such as Wireless Local Area Network (WLAN), Bluetooth, Terrestrial Beason System (TBS), and sensor based positioning including barometric sensor and motion sensor. Additionally, Hybrid positioning has undergone standardization, which includes the use of multiple methods for positioning, e.g., A-GNSS + OTDOA hybrid positioning.

Typically, one of the RAT-dependent methods is chosen per positioning frequency layer. If the Transmissions Reception Points (TRPs) are synchronized, Time Difference of Arrival (TDOA) method may be used, whereas if the TRPs are not synchronized, RTT-based methods may be used. The synchronization of TRPS depends on the deployment.

Standardization of NR sidelink (SL) assisted positioning may be undertaken in the future, e.g., in Release 18. Sidelink positioning (SL-Pos), for example, may use at least one non-NR nodeB (gNB) type transmitter (for example, another UE) that has a known, accurate location (has lower variance than a typical error estimate for UE position).

In SL positioning, a node with a position that is known, and that can be used for SL positioning is sometimes referred to as an anchor node. An anchor node may be a Roadside Unit (RSU) or a dedicated anchor, e.g., similar to Terrestrial Beacon systems (TBS), TPs, RPs). Anchor nodes may be synchronized with the synchronization maintained, e.g., through a Satellite Positioning System (SPS), such as Global Positioning System (GPS) or by system operators. Anchor nodes may be asynchronized, which is the default scenario where no synchronization procedure has been applied.

Knowing the synchronization status of the anchor nodes will allow the UE to use appropriate and efficient positioning techniques for SL positioning. For example, if certain anchor nodes are synchronized, the UE may apply TDOA techniques with these anchor nodes. On the other hand, if an anchor node is not synchronized with another node, TDOA cannot be used with this anchor node, and another positioning technique, such as RTT, may be used.

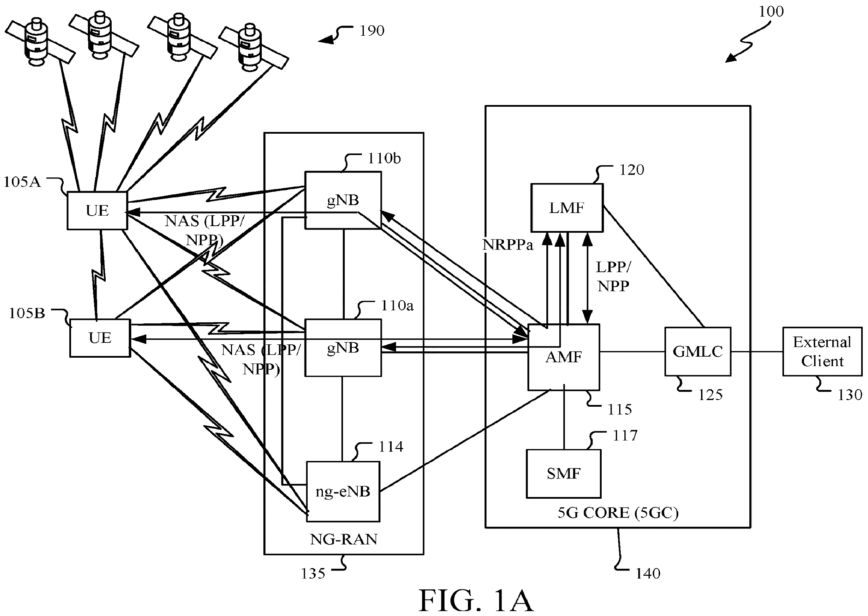

**FIG. 1A** shows an example of a communication system 100 that includes a first UE 105A, a second UE 105B, a Radio Access Network (RAN) 135, here a Fifth Generation (5G) Next Generation (NG) RAN (NG-RAN), and a 5G Core Network (5GC) 140. The UE 105A and UE 105B may be sometimes referred to herein as UE 105 individually or UEs 105 collectively. The UE 105 may be, e.g., an IoT device, a location tracker device, a cellular telephone, a vehicle, an On-Board Unit (OBU), or other similar type of device. A 5G network may also be referred to as a New Radio (NR) network; NG-RAN 135 may be referred to as a 5G RAN or as an NR RAN; and 5GC 140 may be referred to as an NG Core network (NGC). Standardization of an NG-RAN and 5GC is ongoing in the 3^{rd} Generation Partnership Project (3GPP). Accordingly, the NG-RAN 135 and the 5GC 140 may conform to current or future standards for 5G support from 3GPP. The RAN 135 may be another type of RAN, e.g., a 3G RAN, a 4G Long Term Evolution (LTE) RAN, etc. The UE 105B may be configured and coupled similarly to the UE 105A to send and/or receive signals to/from similar other entities in the system 100. The communication system 100 may utilize information from a constellation of satellite vehicles (SVs) 190 for a Satellite Positioning System (SPS) (e.g., a Global Navigation Satellite System (GNSS)) like the Global Positioning System (GPS), the Global Navigation Satellite System (GLONASS), Galileo, or Beidou or some other local or regional SPS such as the Indian Regional Navigational Satellite System (IRNSS), the European Geostationary Navigation Overlay Service (EGNOS), or the Wide Area Augmentation System (WAAS). Additional components of the communication system 100 are described below. The communication system 100 may include additional or alternative components.

As shown in FIG. 1A, the NG-RAN 135 includes NR nodeBs (gNBs) 110a, 110b, and a next generation eNodeB (ng-eNB) 114, and the 5GC 140 includes an Access and Mobility Management Function (AMF) 115, a Session Management Function (SMF) 117, a Location Management Function (LMF) 120, and a Gateway Mobile Location Center (GMLC) 125. The gNBs 110a, 110b and the ng-eNB 114 are communicatively coupled to each other, are each configured wirelessly communicate to bi-directionally with the UEs 105, and are each communicatively coupled to, and configured to bi-directionally communicate with, the AMF 115. The gNBs 110a, 110b, and the ng-eNB 114 may be referred to as base stations (BSs). The AMF 115, the SMF 117, the LMF 120, and the GMLC 125 are communicatively coupled to each other, and the GMLC 125 is communicatively coupled to an external client 130. The SMF 117 may serve as an initial contact point of a Service Control Function (SCF) (not shown) to create, control, and delete media sessions. The base stations 110a, 110b, 114 may be a macro cell (e.g., a high-power cellular base station), or a small cell (e.g., a low-power cellular base station), or an access point (e.g., a short-range base station configured to communicate with short-range technology such as WiFi, WiFi-Direct (WiFi-D), Bluetooth^{®}, Bluetooth^{®}-low energy (BLE), Zigbee, etc. One or more of the base stations 110a, 110b, 114 may be configured to communicate with the UEs 105 via multiple carriers. Each of the base stations 110a, 110b, 114 may provide communication coverage for a respective geographic region, e.g., a cell. Each cell may be partitioned into multiple sectors as a function of the base station antennas.

FIG. 1A provides a generalized illustration of various components, any or all of which may be utilized as appropriate, and each of which may be duplicated or omitted, as necessary. Specifically, although only UEs 105 are illustrated, many UEs (e.g., hundreds, thousands, millions, etc.) may be utilized in the communication system 100. Similarly, the communication system 100 may include a larger (or smaller) number of SVs (i.e., more or fewer than the four SVs 190 shown), gNBs 110a, 110b, ng-eNBs 114, AMFs 115, external clients 130, and/or other components. The illustrated connections that connect the various components in the communication system 100 include data and signaling connections which may include additional (intermediary) components, direct or indirect physical and/or wireless connections, and/or additional networks. Furthermore, components may be rearranged, combined, separated, substituted, and/or omitted, depending on desired functionality.

While FIG. 1A illustrates a 5G-based network, similar network implementations and configurations may be used for other communication technologies, such as 3G, Long Term Evolution (LTE), etc. Implementations described herein (be they for 5G technology and/or for one or more other communication technologies and/or protocols) may be used to transmit (or broadcast) directional synchronization signals, receive and measure directional signals at UEs (e.g., the UEs 105) or at base stations 110a, 110b, 114 and/or provide location assistance to the UEs 105 (via the GMLC 125 or other location server) and/or compute a location for one or both of the UEs 105 at a location-capable device such as the UEs 105, the base stations 110a, 110b, or the LMF 120 based on measurement quantities received at the UEs 105 or the base stations 110a, 110b, 114 for such directionally-transmitted signals. The gateway mobile location center (GMLC) 125, the location management function (LMF) 120, the access and mobility management function (AMF) 115, the SMF 117, the ng-eNB (eNodeB) 114 and the gNBs (gNodeBs) 110a, 110b are examples and may, in various embodiments, be replaced by or include various other location server functionality and/or base station functionality, respectively.

The system 100 is capable of wireless communication in that components of the system 100 can communicate with one another (at least sometimes using wireless connections) directly or indirectly, e.g., via the base stations 110a, 110b, 114 and/or the network 140 (and/or one or more other devices not shown, such as one or more other base transceiver stations). For indirect communications, the communications may be altered during transmission from one entity to another, e.g., to alter header information of data packets, to change format, etc. The UEs 105 may include multiple UEs and may be a mobile wireless communication device but may communicate wirelessly and via wired connections. The UEs 105 may be any of a variety of devices, e.g., a smartphone, a tablet computer, a vehicle-based device, etc., but these are examples only as the UEs 105 is not required to be any of these configurations, and other configurations of UEs may be used. Other UEs may include wearable devices (e.g., smart watches, smart jewelry, smart glasses, or headsets, etc.). Still other UEs may be used, whether currently existing or developed in the future. Further, other wireless devices (whether mobile or not) may be implemented within the system 100 and may communicate with each other and/or with the UEs 105, the base stations 110a, 110b, 114, the core network 140, and/or the external client 130. For example, such other devices may include internet of thing (IoT) devices, medical devices, home entertainment and/or automation devices, etc. The core network 140 may communicate with the external client 130 (e.g., a computer system), e.g., to allow the external client 130 to request and/or receive location information regarding the UEs 105 (e.g., via the GMLC 125).

The UEs 105 or other devices may be configured to communicate in various networks and/or for various purposes and/or using various technologies (e.g., 5G, Wi-Fi communication, multiple frequencies of Wi-Fi communication, satellite positioning, one or more types of communications (e.g., GSM (Global System for Mobiles), CDMA (Code Division Multiple Access), LTE (Long-Term Evolution), V2X (e.g., V2P (Vehicle-to-Pedestrian), V2I (Vehicle-to-Infrastructure), V2V (Vehicle-to-Vehicle), etc.), IEEE 802.11p, etc.). V2X communications may be cellular (Cellular-V2X (C-V2X)) and/or WiFi (e.g., DSRC (Dedicated Short-Range Connection)). The system 100 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc. The UEs 105 may communicate with each other through UE-to-UE sidelink (SL) communications by transmitting over one or more sidelink channels, such as a physical sidelink synchronization channel (PSSCH), a physical sidelink broadcast channel (PSBCH), a physical sidelink control channel (PSCCH), Synchronization Signal Block (SSB), sidelink channel state information reference signal (SL-CSIRS), physical sidelink feedback channel (PSFCH), or sidelink sounding reference signals (SL-SRS).

The UEs 105 may comprise and/or may be referred to as a device, a mobile device, a wireless device, a mobile terminal, a terminal, a mobile station (MS), a Secure User Plane Location (SUPL) Enabled Terminal (SET), or by some other name. Moreover, the UEs 105 may correspond to a cellphone, smartphone, laptop, tablet, PDA, tracking device, navigation device, Internet of Things (IoT) device, asset tracker, health monitors, security systems, smart city sensors, smart meters, wearable trackers, or some other portable or moveable device. Typically, though not necessarily, the UEs 105 may support wireless communication using one or more Radio Access Technologies (RATs) such as Global System for Mobile communication (GSM), Code Division Multiple Access (CDMA), Wideband CDMA (WCDMA), LTE, High Rate Packet Data (HRPD), IEEE 802.11 WiFi (also referred to as Wi-Fi), Bluetooth^{®} (BT), Worldwide Interoperability for Microwave Access (WiMAX), 5G new radio (NR) (e.g., using the NG-RAN 135 and the 5GC 140), etc. The UEs 105 may support wireless communication using a Wireless Local Area Network (WLAN) which may connect to other networks (e.g., the Internet) using a Digital Subscriber Line (DSL) or packet cable, for example. The use of one or more of these RATs may allow the UEs 105 to communicate with the external client 130 (e.g., via elements of the 5GC 140 not shown in FIG. 1A, or possibly via the GMLC 125) and/or allow the external client 130 to receive location information regarding the UEs 105 (e.g., via the GMLC 125).

Each of the UEs 105 may include a single entity or may include multiple entities such as in a personal area network where a user may employ audio, video and/or data I/O (input/output) devices and/or body sensors and a separate wireline or wireless modem. An estimate of a location of a UE, e.g., UE 105, may be referred to as a location, location estimate, location fix, fix, position, position estimate, or position fix, and may be geographic, thus providing location coordinates for the UE (e.g., latitude and longitude) which may or may not include an altitude component (e.g., height above sea level, height above or depth below ground level, floor level, or basement level). Alternatively, a location of the UE may be expressed as a civic location (e.g., as a postal address or the designation of some point or small area in a building such as a particular room or floor). A location of the UE may be expressed as an area or volume (defined either geographically or in civic form) within which the UE is expected to be located with some probability or confidence level (e.g., 67%, 95%, etc.). A location of the UE may be expressed as a relative location comprising, for example, a distance and direction from a known location. The relative location may be expressed as relative coordinates (e.g., X, Y (and Z) coordinates) defined relative to some origin at a known location which may be defined, e.g., geographically, in civic terms, or by reference to a point, area, or volume, e.g., indicated on a map, floor plan, or building plan. In the description contained herein, the use of the term location may comprise any of these variants unless indicated otherwise. When computing the location of a UE, it is common to solve for local x, y, and possibly z coordinates and then, if desired, convert the local coordinates into absolute coordinates (e.g., for latitude, longitude, and altitude above or below mean sea level).

The UEs 105 may be configured to communicate with other entities using one or more of a variety of technologies. The UEs 105 may be configured to connect indirectly to one or more communication networks via one or more device-to-device (D2D) peer-to-peer (P2P) links. The D2D P2P links may be supported with any appropriate D2D radio access technology (RAT), such as LTE Direct (LTE-D), WiFi Direct (WiFi-D), Bluetooth^{®}, and so on. One or more of a group of UEs utilizing D2D communications may be within a geographic coverage area of a Transmission/Reception Point (TRP) such as one or more of the gNBs 110a, 110b, and/or the ng-eNB 114. Other UEs in such a group may be outside such geographic coverage areas or may be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP. One or more of a group of UEs utilizing D2D communications may be within a geographic coverage area of a TRP. Other UEs in such a group may be outside such geographic coverage areas or be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP.

Base stations (BSs) in the NG-RAN 135 shown in FIG. 1A include NR Node Bs, referred to as the gNBs 110a and 110b. Pairs of the gNBs 110a, 110b in the NG-RAN 135 may be connected to one another via one or more other gNBs. Access to the 5G network is provided to the UEs 105 via wireless communication between the UEs and one or more of the gNBs 110a, 110b, which may provide wireless communications access to the 5GC 140 on behalf of the UE using 5G. In FIG. 1A, the serving gNB for the UE 105A is assumed to be the gNB 110b, while the serving gNB for the UE 105B is assumed to be the gNB 110a, although another gNB may act as a serving gNB if the UEs 105 move to another location or may act as a secondary gNB to provide additional throughput and bandwidth to the UEs 105 and the UEs 105 may share the same serving gNB.

Base stations (BSs) in the NG-RAN 135 shown in FIG. 1A may include the ng-eNB 114, also referred to as a next generation evolved Node B. The ng-eNB 114 may be connected to one or more of the gNBs 110a, 110b in the NG-RAN 135, possibly via one or more other gNBs and/or one or more other ng-eNBs. The ng-eNB 114 may provide LTE wireless access and/or evolved LTE (eLTE) wireless access to the UEs 105. One or more of the gNBs 110a, 110b and/or the ng-eNB 114 may be configured to function as positioning-only beacons which may transmit signals to assist with determining the position of the UEs 105 but may not receive signals from the UEs 105 or from other UEs.

The base stations 110a, 110b, 114 may each comprise one or more TRPs. For example, each sector within a cell of a base station may comprise a TRP, although multiple TRPs may share one or more components (e.g., share a processor but have separate antennas). The system 100 may include only macro TRPs or the system 100 may have TRPs of different types, e.g., macro, pico, and/or femto TRPs, etc. A macro TRP may cover a relatively large geographic area (e.g., several kilometers in radius) and may allow unrestricted access by terminals with service subscription. A pico TRP may cover a relatively small geographic area (e.g., a pico cell) and may allow unrestricted access by terminals with service subscription. A femto or home TRP may cover a relatively small geographic area (e.g., a femto cell) and may allow restricted access by terminals having association with the femto cell (e.g., terminals for users in a home).

Communications system 100 may support NR and support communications between the one or more base stations 110a, 110b, 114 and supported UEs 105. The UEs may be dispersed throughout the wireless communications system 100, and each UE may be stationary or mobile. As part of the communication, each of the base stations 110a, 110b, 114 and UEs 105 may support reference signal transmission for operations, including channel estimation, beam management and scheduling, and wireless device positioning within the coverage areas of one or more base stations.

For example, the base stations 110a, 110b, 114 may transmit one or more downlink reference signals for NR communications, including channel state information reference signal (CSI-RS) transmission. Each of the CSI-RS transmissions may be configured for a specific UE 105 to estimate the channel and report channel quality information. The reported channel quality information may be used for scheduling or link adaptation at the base stations 110a, 110b, 114 or as part of a mobility or beam management procedure for directional transmission associated with the enhanced channel resources. Similarly, the UEs 105 may be configured to transmit uplink signals to one or more base stations 110a, 110b, 114 and sidelink transmissions between UEs 105.

The base stations 110a, 110b, 114 may transmit one or more additional downlink reference signals, including a positioning reference signal (PRS) transmission. The PRS transmission may be configured for a specific UEs 105to measure and report one or more report parameters (for example, report quantities) associated with positioning and location information. The PRS transmission and report parameter feedback may support various location services (for example, navigation systems and emergency communications). In some examples, the report parameters supplement one or more additional location systems supported by the UE 105 (such as global positioning system (GPS) technology).

A base station 110a, 110b, 114 may configure a PRS transmission on one or more PRS resources of a channel. A PRS resource may span resource elements of multiple physical resource blocks (PRBs) within one or more OFDM symbols of a slot depending on a configured number of ports. For example, a PRS resource may span one symbol of a slot and contain one port for transmission. In any OFDM symbol, the PRS resources may occupy consecutive PRBs. In some examples, the PRS transmission may be mapped to consecutive OFDM symbols of the slot. In other examples, the PRS transmission may be mapped to interspersed OFDM symbols of the slot. Additionally, the PRS transmission may support frequency hopping within PRBs of the channel.

The one or more PRS resources may span a number of PRS resource sets according to a PRS resource setting of the base station 110a, 110b, 114. The structure of the one or more PRS resources, PRS resource sets, and PRS resource settings within a PRS transmission may be referred to as a multi-level resource setting. For example, multi-level PRS resource setting of the base station 110a, 110b, 114 may include multiple PRS resource sets and each PRS resource set may contain a set of PRS resources (such as a set of 4 PRS resources).

The UEs 105 may receive the PRS transmission over the one or more PRS resources of the slot. The UEs 105 may determine a report parameter for at least some of if not each PRS resource included in the transmission. The report parameter (which may include a report quantity) for each PRS resource may include one or more of a time of arrival (TOA), a reference signal time difference (RSTD), a reference signal receive power (RSRP), an angle, a PRS identification number, a reception to transmission difference (UE Rx-Tx), a signal-to-noise ratio (SNR), or a reference signal receive quality (RSRQ).

Similarly, the UEs 105 may be configured to transmit one or more additional uplink reference signals that may be received by base stations 110a, 110b, 114 and used for positioning. For example, UEs 105 may transmit sounding reference signal (SRS) for positioning. Base stations 110a, 110b, 114 that receive uplink reference signals from a UEs 105 may perform positioning measurements, such as one or more of a time of arrival (TOA), reception to transmission difference (UE Rx-Tx).

Aspects of wireless communications system 100 may include use of downlink PRS transmissions by the base station 110a, 110b, 114 or uplink SRS transmissions by a UE, e.g., UE 105A or UE 105B, for UE location determination. For downlink-based UE location determination, a location server, e.g., LMF 120 in a NR network, or E-SMLC in LTE (sometimes referred to as location server 120), may be used to provide positioning assistance, such as PRS assistance data (AD) to the UE. For uplink-based UE location determination, a location server 120 and/or a serving base station, e.g., gNB 110a, may be used to provide positioning assistance, such as SRS assistance data, to receiving entities, such as base stations (e.g., gNBs 110a, 110b, and the other UE(s)). The SRS assistance data, for example, may include the SRS transmission occasion and other parameters, e.g., such as the reference signal pattern, power if different from nominal, the number of repetitions, etc.

A position estimation of the UE may be determined using reference signals, such as PRS signals or SRS for positioning signals, or other reference signals, from one or more base stations 110a, 110b, 114 or the UE. Positioning methods, such as Time Difference of Arrival (TDOA), DL Time Difference of Arrival (DL-TDOA), DL Angle of Departure (DL AoD), Enhanced Cell ID (ECID) are position methods that may be used to estimate the position of the UE using reference signals from base stations. TDOA, for example, relies on measuring Reference Signal Time Differences (RSTDs) between downlink (DL) signals received from a base station for a reference cell and base station(s) for one or more neighbor cells. The DL signals for which RTSDs may be obtained comprise a Cell-specific Reference Signal (CRS) and a Positioning Reference Signal (PRS) - e.g., as defined in 3GPP TS 36.211.

Other positioning methods may use reference signals transmitted by the UE including uplink based positioning methods and downlink and uplink based positioning methods. For example, uplink based positioning methods include, e.g., UL Time Difference of Arrival (UL-TDOA), UL Angle of Arrival (UL AoA), UL Relative Time of Arrival (UL-RTOA) and downlink and uplink based positioning methods, e.g., Round-trip time (RTT) with one or more neighboring base stations. Additionally, sidelink based positioning may be used in which UEs transmit and/or receive sidelink positioning reference signals that are measured and used for positioning.

As noted, while FIG. 1A depicts nodes configured to communicate according to 5G communication protocols, nodes configured to communicate according to other communication protocols, such as, for example, an LTE protocol or IEEE 802.11x protocol, may be used. For example, in an Evolved Packet System (EPS) providing LTE wireless access to the UEs 105, a RAN may comprise an Evolved Universal Mobile Telecommunications System (UMTS) Terrestrial Radio Access Network (E-UTRAN) which may comprise base stations comprising evolved Node Bs (eNBs). A core network for EPS may comprise an Evolved Packet Core (EPC). An EPS may comprise an E-UTRAN plus EPC, where the E-UTRAN corresponds to the NG-RAN 135 and the EPC corresponds to the 5GC 140 in FIG. 1A.

The gNBs 110a, 110b and the ng-eNB 114 may communicate with the AMF 115, which, for positioning functionality, communicates with the LMF 120. The AMF 115 may support mobility of the UEs 105, including cell change and handover and may participate in supporting a signaling connection to the UEs 105 and possibly data and voice bearers for the UEs 105. The LMF 120 may communicate directly with the UEs 105, e.g., through wireless communications, or directly with the base stations 110a, 110b, 114. The LMF 120 may support positioning of the UEs 105 when the UEs 105 accesses the NG-RAN 135 and may support position procedures / methods such as Assisted GNSS (A-GNSS), Time Difference of Arrival (TDOA) (e.g., Downlink (DL) TDOA or Uplink (UL) TDOA), Real Time Kinematics (RTK), Precise Point Positioning (PPP), Differential GNSS (DGNSS), Enhanced Cell ID (E-CID), angle of arrival (AOA), angle of departure (AOD), and/or other position methods. The LMF 120 may process location services requests for the UEs 105, e.g., received from the AMF 115 or from the GMLC 125. The LMF 120 may be connected to the AMF 115 and/or to the GMLC 125. The LMF 120 may be referred to by other names such as a Location Manager (LM), Location Function (LF), commercial LMF (CLMF), or value added LMF (VLMF). A node / system that implements the LMF 120 may additionally or alternatively implement other types of location-support modules, such as an Enhanced Serving Mobile Location Center (E-SMLC) or a Secure User Plane Location (SUPL) Location Platform (SLP). At least part of the positioning functionality (including derivation of the location of the UE) may be performed at the UE (e.g., using signal measurements obtained by the UE for signals transmitted by wireless nodes such as the gNBs 110a, 110b and/or the ng-eNB 114, and/or assistance data provided to the UE, e.g., by the LMF 120). At least part of the positioning functionality (including derivation of the location of the UE) alternatively may be performed at the LMF 120 (e.g., using signal measurements obtained by the gNBs 110a, 110b and/or the ng-eNB 114. The AMF 115 may serve as a control node that processes signaling between the UEs 105 and the core network 140, and provides QoS (Quality of Service) flow and session management. The AMF 115 may support mobility of the UEs 105 including cell change and handover and may participate in supporting signaling connection to the UEs 105.

The GMLC 125 may support a location request for the UEs 105 received from the external client 130 and may forward such a location request to the AMF 115 for forwarding by the AMF 115 to the LMF 120 or may forward the location request directly to the LMF 120. A location response from the LMF 120 (e.g., containing a location estimate for the UEs 105) may be returned to the GMLC 125 either directly or via the AMF 115 and the GMLC 125 may then return the location response (e.g., containing the location estimate) to the external client 130. The GMLC 125 is shown connected to both the AMF 115 and LMF 120, though only one of these connections may be supported by the 5GC 140 in some implementations.

As further illustrated in FIG. 1A, the LMF 120 may communicate with the gNBs 110a, 110b and/or the ng-eNB 114 using a New Radio Position Protocol A (which may be referred to as NPPa or NRPPa), which may be defined in 3GPP Technical Specification (TS) 38.455. NRPPa may be the same as, similar to, or an extension of the LTE Positioning Protocol A (LPPa) defined in 3GPP TS 36.455, with NRPPa messages being transferred between the gNB 110a (or the gNB 110b) and the LMF 120, and/or between the ng-eNB 114 and the LMF 120, via the AMF 115. As further illustrated in FIG. 1A, the LMF 120 and the UEs 105 may communicate using an LTE Positioning Protocol (LPP), which may be defined in 3GPP TS 36.355. The LMF 120 and the UEs 105 may also or instead communicate using a New Radio Positioning Protocol (which may be referred to as NPP or NRPP), which may be the same as, similar to, or an extension of LPP. Here, LPP and/or NPP messages may be transferred between the UEs 105 and the LMF 120 via the AMF 115 and the serving gNB 110a, 110b or the serving ng-eNB 114 for the UEs 105. For example, LPP and/or NPP messages may be transferred between the LMF 120 and the AMF 115 using a 5G Location Services Application Protocol (LCS AP) and may be transferred between the AMF 115 and the UEs 105 using a 5G Non-Access Stratum (NAS) protocol. Communication between the LMF 120 and UEs 105 using LPP protocol, may sometimes referred to herein as direct communication, as the messages are transparent to the serving gNB, i.e., the serving gNB does not need to understand the content of the message, but simply forwards the communication between the LMF 120 and UEs 105. In contrast, during communications using NPP protocol, such as NRPPa, the serving gNB unpacks the message, picks out the content, which is packed and sent to UE, e.g., in a Uu air interface via Radio Resource Control (RRC), Medium Access Control - Control Element (MAC-CE), Downlink Control Information (DCI), etc. The LPP and/or NPP protocol may be used to support positioning of the UEs 105 using UE-assisted and/or UE-based position methods such as A-GNSS, RTK, TDOA, AOA, AOD, and/or E-CID. The NRPPa protocol may be used to support positioning of the UEs 105 using network-based position methods such as E-CID (e.g., when used with measurements obtained by the gNB 110a, 110b or the ng-eNB 114) and/or may be used by the LMF 120 to obtain location related information from the gNBs 110a, 110b and/or the ng-eNB 114, such as parameters defining directional Synchronization Signal (SS) transmissions from the gNBs 110a, 110b, and/or the ng-eNB 114. The LMF 120 is illustrated in FIG. 1A as being located in the core network 140, but may be external to the core network 140, e.g., in an NG-RAN. For example, the LMF 120 may be co-located or integrated with a gNB or a TRP, or may be disposed remote from the gNB and/or the TRP and configured to communicate directly or indirectly with the gNB and/or the TRP.

With a UE-assisted position method, the UE, e.g., UE 105A or UE 105B may obtain location measurements and send the measurements to a location server (e.g., the LMF 120) for computation of a location estimate for the UE. For example, the location measurements may include one or more of a Received Signal Strength Indication (RSSI), Round Trip signal propagation Time (RTT), Reference Signal Time Difference (RSTD), Reference Signal Received Power (RSRP) and/or Reference Signal Received Quality (RSRQ), AOA, AOD, for the gNBs 110a, 110b, the ng-eNB 114, and/or a WLAN AP. The location measurements may also or instead include measurements of GNSS pseudorange, code phase, and/or carrier phase for the SVs 190-193 .

With a UE-based position method, the UE, e.g., UE 105A or UE 105B, may obtain location measurements (e.g., which may be the same as or similar to location measurements for a UE-assisted position method) and may compute a location of the UE (e.g., with the help of assistance data received from a location server such as the LMF 120 or broadcast by the gNBs 110a, 110b, the ng-eNB 114, or other base stations or APs).

With a network-based position method, one or more base stations (e.g., the gNBs 110a, 110b, and/or the ng-eNB 114), sidelink UEs, or APs may obtain location measurements (e.g., measurements of RSSI, RTT, RSRP, RSRQ, AOA, AOD, or Time of Arrival (ToA) for signals transmitted by the UE, e.g., UE 105A or UE 105B) and/or may receive measurements obtained by the UE. The one or more base stations or APs may send the measurements to a location server (e.g., the LMF 120) for computation of a location estimate for the UE.

Information provided by the gNBs 110a, 110b, and/or the ng-eNB 114 to the LMF 120 using NRPPa may include timing and configuration information for directional SS transmissions and location coordinates. The LMF 120 may provide some or all of this information to the UEs 105 as assistance data in an LPP and/or NPP message via the NG-RAN 135 and the 5GC 140.

An LPP or NPP message sent from the LMF 120 to the UEs 105 may instruct the UEs 105 to do any of a variety of things depending on desired functionality. For example, the LPP or NPP message could contain an instruction for the UEs 105 to obtain measurements for GNSS (or A-GNSS), WLAN, E-CID, and/or TDOA (or some other position method). In the case of E-CID, the LPP or NPP message may instruct the UEs 105 to obtain one or more measurement quantities (e.g., beam ID, beam width, mean angle, RSRP, RSRQ measurements) of directional signals transmitted within particular cells supported by one or more of the gNBs 110a, 110b, and/or the ng-eNB 114 (or supported by some other type of base station such as an eNB or WiFi AP). The UEs 105 may send the measurement quantities back to the LMF 120 in an LPP or NPP message (e.g., inside a 5G NAS message) via the serving gNB 110a (or the serving ng-eNB 114) and the AMF 115.

As noted, while the communication system 100 is described in relation to 5G technology, the communication system 100 may be implemented to support other communication technologies, such as GSM, WCDMA, LTE, etc., that are used for supporting and interacting with mobile devices such as the UEs 105 (e.g., to implement voice, data, positioning, and other functionalities). In some such embodiments, the 5GC 140 may be configured to control different air interfaces. For example, the 5GC 140 may be connected to a WLAN using a Non-3GPP InterWorking Function (N3IWF, not shown FIG. 1A) in the 5GC 150. For example, the WLAN may support IEEE 802.11 WiFi access for the UEs 105 and may comprise one or more WiFi APs. Here, the N3IWF may connect to the WLAN and to other elements in the 5GC 140 such as the AMF 115. In some embodiments, both the NG-RAN 135 and the 5GC 140 may be replaced by one or more other RANs and one or more other core networks. For example, in an EPS, the NG-RAN 135 may be replaced by an E-UTRAN containing eNBs and the 5GC 140 may be replaced by an EPC containing a Mobility Management Entity (MME) in place of the AMF 115, an E-SMLC in place of the LMF 120, and a GMLC that may be similar to the GMLC 125. In such an EPS, the E-SMLC may use LPPa in place of NRPPa to send and receive location information to and from the eNBs in the E-UTRAN and may use LPP to support positioning of the UEs 105. In these other embodiments, positioning of the UEs 105 using directional PRSs may be supported in an analogous manner to that described herein for a 5G network with the difference that functions and procedures described herein for the gNBs 110a, 110b, the ng-eNB 114, the AMF 115, and the LMF 120 may, in some cases, apply instead to other network elements such eNBs, WiFi APs, an MME, and an E-SMLC.

Positioning for UEs in a radio network, such as communication system 100 shown in FIG. 1A, typically uses Uu interfaces, i.e., radio interface between the UE and the radio access network, for DL PRS and/or UL PRS. Positioning for UEs may use sidelink PRS (SL-PRS), which may be a specific sidelink defined reference signal for positioning or may reuse Uu PRS, e.g., UL PRS, sometimes referred to as Sounding Reference Signal for positioning (SRSPos), or other reference signals may be transmitted in the sidelink channel. Sidelink positioning may enhance UE positioning by providing an additional transmission (or reception) node. A sidelink UE, such as UE 105B, with a known position may be used to support position determination of a target UE, such as UE 105, where the sidelink UE is sometimes referred to as an anchor node.

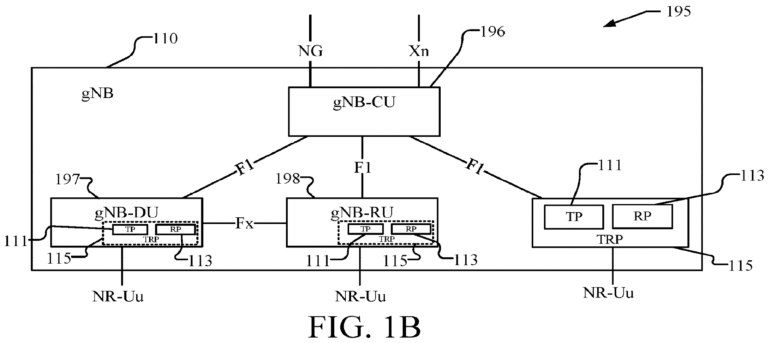

**FIG. 1B** shows an architecture diagram of an NG-RAN node 195 that may be within an NG-RAN 135 in FIG. 1A, e.g., as a separate entity or as part of another gNB. The NG-RAN node 195 may be a TRP 110, according to one implementation. The architecture shown in FIG. 1A, for example, may be applicable to any TRP 110 in FIG. 1A.

As illustrated, TRP 110 may include a gNB Central Unit (gNB-CU) 196, a gNB Distributed Unit (gNB-DU) 197, a gNB Remote Unit (gNB-RU) 198, which may be physically co-located in the TRP 110 or may be physically separate. The gNB-CU 196 is a logical or physical node hosting support for Radio Resource Control (RRC), Service Data Adaptation Protocol (SDAP) and Packet Data Convergence Protocol (PDCP) protocols of the TRP 110 used over the NR Uu air interface and controlling the operation of one or more gNB-DUs and/or gNB-RUs. The gNB-CU 196 terminates an F1 interface connected with a gNB-DU and in some implementations, an F1 interface connected with a gNB-RU. As illustrated, the gNB-CU 196 may communicate with an AMF via an NG interface. The gNB-CU 196 may further communicate with one or more other gNBs 110 via an Xn interface. The gNB-DU 197 is a logical or physical node hosting support for Radio Link Control (RLC), Medium Access Control (MAC) and Physical (PHY) protocol layers used over the NR Uu air interface of the TRP 110, operation of which is partly controlled by gNB-CU 196. The gNB-DU terminates the F1 interface connected with the gNB-CU 196, and may terminate a lower layer split point interface Fx with a gNB-RU. The gNB-RU 198 may be based on a lower layer function split and is a logical or physical node hosting support for lower layer functions, such as PHY and Radio Frequency (RF) protocol layers used over the NR Uu air interface of the TRP 110, operation of which is partly controlled by gNB-CU 196 and/or gNB-DU 197. The gNB-RU 198 terminates the Fx interface connected with the gNB-DU 197 and in some implementations may terminate the F1 interface connected with the gNB-CU 196.

The gNB-CU 196 requests positioning measurements (e.g. E-CID) to the gNB-DU 197 and/or gNB-RU 198. The gNB-DU 197 and/or gNB-RU 198 may report the measurements back to the gNB-CU 196. A gNB-DU 197 or gNB-RU 198 may include positioning measurement functionality. It should be understood that a separate measurement node is not precluded.

Additionally, as illustrated in FIG. 1B, TRP 110 may include a Transmission Point (TP) 111 and a Reception Point (RP) 113 combined into a Transmission Reception Point (TRP) 115, which may be physically or logically located in the TRP 110. The gNB-CU 196 may be configured to communicate with the TP 111 and RP 113, e.g., via F1 interfaces. The gNB-CU 196, thus, controls one or more TPs 111 and RPs 113 which are accessible from the gNB-CU 196 via an F1 interface.

In some embodiments, the NG-RAN node 195 (or gNB 110) may comprise a subset of the elements shown in FIG. 1B. For example, the NG- RAN node 195 may comprise the gNB-CU 196 but may not include one or more of gNB-DU 197 and gNB-RU 198, RP 113, or TP 111. Alternatively, NG-RAN node 195 may include one or more of gNB-DU 197 and, RP 113 or TP 111 but may not include gNB-RU 198. Further, the elements shown in FIG. 1B may be logically separate but physically co-located or may be partially or completely physically separate. For example, one or more of gNB-DU 197 and/or gNB-RU 198, RP 113 or TP 111 may be physically separate from gNB-CU 196 or may be physically combined with gNB-CU 196. In the case of physical separation, the F1 or Fx interface may define signaling over a physical link or connection between two separated elements. In some implementations, gNB-CU 196 may be split into a control plane portion (referred to as a CU-CP or gNB-CU-CP) and a user plane portion (referred to as CU-UP or gNB-CU-UP). In this case, both the gNB-CU-CP and gNB-CU-UP may interact with gNB-DU 197 and/or gNB-RU 198 to support NR Uu air interface signaling for control plane and user plane, respectively. However, only the gNB-CU-CP may interact with TPs 111 and RPs 113 to support and control location related communication.

Protocol layering between the gNB-CU 196 and the TP 111, and RP 113 may be based on F1 C as defined in 3GPP TS 38.470, which uses an F1 Application Protocol (F1AP) at the top level as specified in 3GPP TS 38.473. New messages to support positioning could be added directly into F1AP or could be introduced in a new location specific protocol which is transported using F1AP.

The location procedures with the gNB-CU 196 may comprise all location related procedures on NG, Xn, and NR-Uu interfaces. For example, the location procedures between AMF 115 and the NG-RAN node 195 may use NGAP. The location procedures between NG-RAN node 195 and other NG-RAN nodes, e.g., gNBs 110, may use XnAP or a protocol above XnAP, such as an extended NR Positioning Protocol A (NRPPa) as defined in 3GPP TS 38.455. The location procedures between NG-RAN node 195 and UE 105 may use RRC and/or LPP.

The corresponding messages to support positioning may be carried inside a transparent F1AP message transfer container. For example, the Transfer of an NGAP Location Reporting Control and NAS Transport message may be carried in an UL/DL NGAP Message Transfer. The Transfer of location related XnAP messages may be carried in an UL/DL XnAP Message Transfer. The Transfer of location related RRC(LPP) messages may be carried in an UL/DL RRC (LPP) Message Transfer.

One example implementation of sidelink communication is found in vehicular communication systems, such as Vehicle to Everything (V2X), which may be used for safety related applications, such as safety warnings, traffic congestions (e.g., automated traffic control), and coordinated or automated vehicle maneuvering. For NR V2X sidelink communications, there are two main sources for synchronization of nodes, namely GNSS and a gNB or eNB (referred to as gNB/eNB). In addition, a UE may use another UE as a synchronization reference, e.g., a SyncRef UE, or use its own internal clock as its synchronization reference. Thus, there are generally four types of synchronization references that may be used for sidelink, such as for NR V2X sidelink: gNB/eNB, GNSS, SyncRef UE, or a UE's own internal clock.

For data transfer in NR V2X, by way of example, a UE may select its synchronization reference following the same procedure as used in LTE V2X i.e., based on the different priorities of gNB/eNB, GNSS and SyncRef UEs. The priority of a SyncRef UE may be given by its sidelink synchronization signal (SLSS) ID and the in-coverage indicator *I*_{IC} that is carried on the PSBCH within the Sidelink Synchronization Signal Block (S-SSB) transmissions of a SyncRef UE. The in-coverage indicator is referred to as *I*IC, where *I*_{IC}=0 indicates that a SyncRef UE is not in coverage of GNSS or a gNB/eNB and *I*_{IC} =1 indicates that it is in coverage of GNSS or a gNB/eNB. The 672 SLSS IDs that are available in NR V2X may be divided into two sets: 1) in coverage SLSS IDs ={0,1,...,335}, and 2) out of coverage SLSS IDs ={336,337,...,671}. SyncRef UEs may transmit a certain combination of Sidelink Primary Synchronization Signal (S-PSS) and S-SSS.

For each SLSS ID, the UE 105 measures an RSRP based on PSBCH Demodulation Reference Signal (DMRS) sent by a SyncRef UE. For SLSS IDs with RSRP above a preconfigured threshold, the UE 105 checks the value of the in-coverage indicator *I*_{IC} carried in the PSBCH. In this way, a UE 105 can determine the SyncRef UEs which are its candidate synchronization reference for a given priority level. For multiple candidate SyncRef UEs in the same priority level, the SyncRef UE with the highest RSRP has higher priority. Thus, synchronization for SL UEs is a function of priority of SyncRef UEs, in-coverage indicator and measured RSRP.

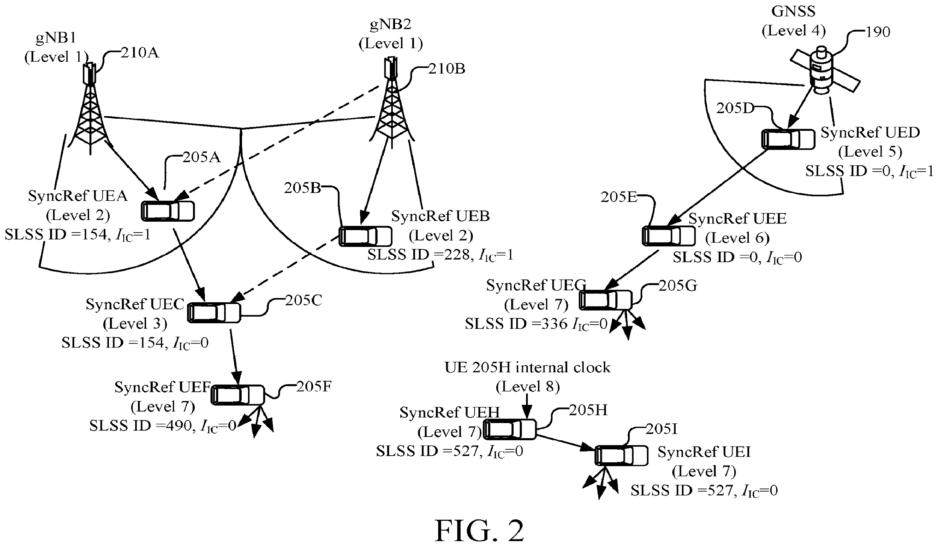

**FIG. 2****,** by way of example, illustrates an environment 200 showing synchronization references SyncRef UEs with different priority levels. Environment includes gNB1 210A and gNB2 210B, which may be, e.g., base stations such as gNB 110 shown in FIG. 1, a GNSS SV 190, and a number of UEs 205A, 205B, 205C, 205D, 205E, 205F, 205G, 205H, and 205I (sometimes collectively referred to as UEs 205), illustrated as vehicles, with the various UEs 205 in sidelink communication and in various states of coverage. FIG. 2 identifies the priority level associated with each node, along with examples, of the SLSS IDs and *I*_{IC} associated with each node. As illustrated, UE 205A is in coverage of gNB1 210A, UE 205B is in coverage of gNB2 210B, and UE 205D is in coverage of GNSS SV 190, while the remaining UEs 205C, 205E, 205F, 205G, 205H, and 205I are out of coverage of gNB/eNB or GNSS. Moreover, UEs 205G and 205I are out of coverage of other SyncRef UEs that are synchronized based on gNB/eNB or GNSS, and are synchronized based on UE 205H's own internal clock. Table 1 illustrates different priority levels based on GNSS based synchronization and gNB/eNB based synchronization.

**TABLE 1**

| Priority Level | GNSS-Based Synchronization | gNB/eNB Based Synchronization |
|---|---|---|
| Level 1 | GNSS | gNB/eNB |
| Level 2 | SyncRef UE in network coverage and directly synchronized to GNSS, i.e., with *I*_{IC}=1 and SLSS ID={0} | SyncRef UE directly synchronized to gNB/eNB, i.e., with *I*_{IC}=1 and SLSS ID={1,...,335} |
| Level 3 | SyncRef UE out of GNSS/network coverage and one hop away from GNSS, i.e., with *I*_{IC}=0 and SLSS ID={0} | SyncRef UE out of GNSS/network coverage and one hop away from a gNB/eNB, i.e., with *I*_{IC}=0 and SLSS ID={1,...,335} |
| Level 4 | gNB/eNB | GNSS |
| Level 5 | SyncRef UE directly synchronized to gNB/eNB, i.e., with *I*_{IC}=1 and SLSS ID={1,...,335} | SyncRef UE directly synchronized to GNSS, i.e., with *I*_{IC}=1 and SLSS ID={0} |
| Level 6 | SyncRef UE out of GNSS/network coverage and one hop away from a gNB/eNB, i.e., with *I*_{IC}=0 and SLSS ID={1,...,335} | SyncRef UE out of GNSS/network coverage and one hop away from GNSS, i.e., with *I*_{IC}=0 and SLSS ID={0} |
| Level 7 | SyncRef UE out of GNSS/network coverage and two or more hops away from a gNB/eNB or GNSS, i.e., with *I*_{IC}=0 and SLSS ID={336,337,...,671} | |
| Level 8 | UE's own internal clock | |

The triggering of transmission of sidelink synchronization signals, e.g., S-SSB transmissions, by a UE (e.g., for the UE to become a SyncRef UE) may be based on a measured signal strength of received signals from the UE's own synchronization reference being lower than a preconfigured threshold. Thus, if the signal strength, e.g., RSRP, of the signals received from a synchronization reference (e.g., a gNB/eNB, GNSS SV, or a SyncRef UE) is lower than a preconfigured threshold, the UE may be triggered to serve as a SyncRef UE by transmitting sidelink synchronization signals (e.g., S-SSB) that are based on the timing reference received from the synchronization reference. For example, referring to FIG. 2, UE 205A may measure the signal strength (e.g., RSRP) of signals from gNB1 210A and UE 205A may transmit sidelink synchronization signals (based on the timing reference received from the gNB 1 210A) if the measured signal strength is below a preconfigured threshold. The UE 205C, which receives sidelink synchronization signals from UE 205A (and/or UE 205B) similarly may measure the signal strength (e.g., RSRP) of the signals received from UE 205A (and/or UE 205B) and UE 205C may transmit sidelink synchronization signals (based on the timing reference received from UE 205A or UE 205B) if the measured signal strength is below a preconfigured threshold.

For example, there are two general modes for triggering S-SSB transmissions at a UE (i.e., for the UE to become a SyncRef UE), e.g., used in sidelink communications, such as NR V2X. In a first mode, the UE may be configured by the network, e.g., a location server, to become a SyncRef UE. In a second mode, the UE decides on its own to become a SyncRef UE when in or out of network coverage. A SyncRef UE sends S-SSBs based on the timing reference that is received from its synchronization reference, e.g., a gNB/eNB or GNSS SV. A UE may decide on its own to become a SyncRef UE, e.g., by comparing the measured RSRP from the serving gNB/eNB with a threshold provided by the network. The UE may measure the RSRP based on reference signals (e.g., Physical Broadcast Channel (PBCH) DMRS) that are associated with the synchronization signal sent by the serving gNB/eNB. If the RSRP is below the provided threshold, the UE may become a SyncRef UE and transmit S-SSBs. The SyncRef UE knows which SLSS ID and resources to use for the S-SSB transmissions based on the sidelink system information provided by the network in the cell. If the RSRP of the serving gNB/eNB is above or equal to the threshold, the UE does not send S-SSBs.

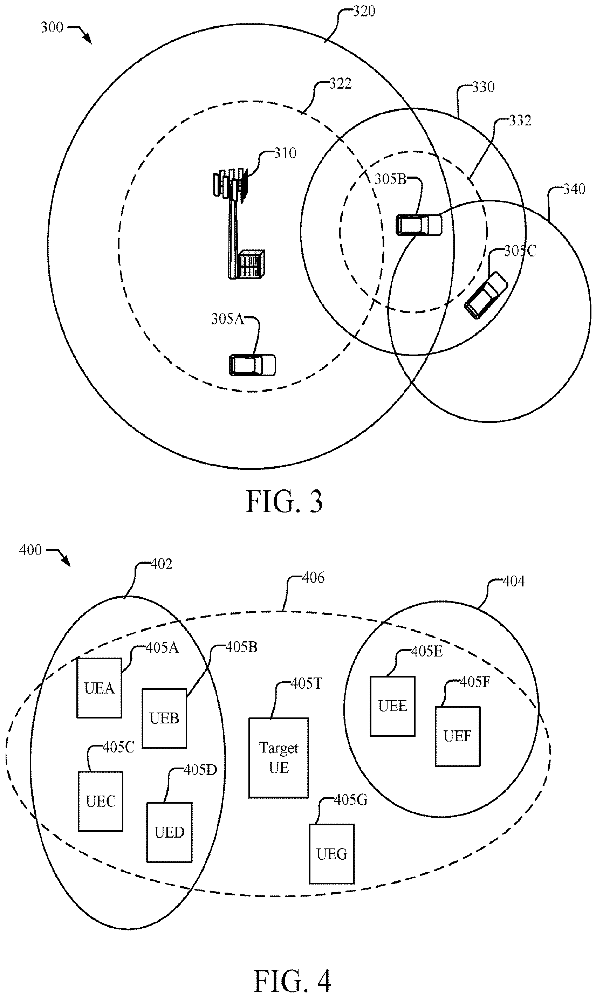

**FIG. 3** illustrates an environment 300 showing triggering of S-SSB transmissions by a UE. FIG. 3, for example, illustrates a gNB 310, which may be, e.g., a base stations such as gNB 110 shown in FIG. 1, and a number of UEs 305A, 305B, and 305C (sometimes collectively referred to as UEs 305), illustrated as vehicles.

By way of example, FIG. 3 illustrates coverage area of the gNB 310 with a circle 320 and illustrates a configured signal strength threshold for the gNB 310 with circle 322 with a dotted line. The configured threshold illustrates distance from the gNB 310 at which the measured signal strength (RSRP) from the gNB 310 will be equal to a preconfigured threshold, e.g., the threshold may be provided to the UEs 205 by the network. Thus, the RSRP measured anywhere inside circle 322 will be greater than the preconfigured threshold, and RSRP measured anywhere between circle 322 and circle 320, i.e., within network coverage but outside the configured threshold area 322, will be less than the preconfigured threshold. Accordingly, the UE 305A, which is within circle 322, will measure an RSRP from its synchronization reference, i.e., gNB 310, that is greater than the configured threshold and accordingly UE 305A will not be triggered to transmit sidelink synchronization signals (e.g., S-SSBs). On the other hand, UE 305B, which is within cell coverage area 320 but outside the configured threshold area 322, will measure an RSRP from its synchronization reference, i.e., gNB 310, that is less than the preconfigured threshold. The UE 305B, accordingly, is triggered to serve as a SyncRef UE and transmit sidelink synchronization signals (e.g., S-SSBs) that are based on the timing reference that UE 305B receives from its synchronization reference, i.e., gNB 310.

FIG. 3 illustrates the coverage area of the UE 305B, acting as a SyncRef UE, with a circle 330 and illustrates a configured signal strength threshold for the UE 305B with circle 332 with a dotted line. Similar to the configured threshold 322 around gNB 310, the configured threshold 332 around UE 305B illustrates the distance from the UE 305B at which the measured signal strength (RSRP) from the UE 305B will be equal to the preconfigured threshold, e.g., the threshold may be provided to other UEs 305 by the network, such as a location server, serving gNB, or UE 305B. Thus, any UE that is outside coverage area 320 of the gNB 310, and is receiving sidelink synchronization signals from UE 305B will measure the signal strength of signals from the UE 305B and the RSRP measured anywhere inside circle 332 will be greater than the preconfigured threshold, and RSRP measured anywhere between circle 332 and circle 330, i.e., within coverage of UE 305B but outside the configured threshold area 332, will be less than the preconfigured threshold. For example, UE 305C, which is within coverage area 330 but outside the configured threshold area 332, will measure an RSRP from its synchronization reference, i.e., UE 305B, that is less than the preconfigured threshold. The UE 305C, accordingly, is triggered to serve as a SyncRef UE and transmit sidelink synchronization signals (e.g., S-SSBs) that are based on the timing reference that UE 305C receives from its synchronization reference, i.e., UE 305B.

The coverage area of UE 305C, acting as a SyncRef UE, is illustrated a circle 340. UEs that are within coverage area 340 may use the sidelink synchronization signal transmitted by UE 305C, but these UEs may not become a SyncRef UE because UE 305C a two hops away from the gNB 310. Accordingly, FIG. 3 does not show a configured threshold area associated with UE 305C.

For sidelink positioning, the selection of sidelink UEs to perform sidelink positioning for a target UE may be based on the synchronization reference that is associated with each of the sidelink UEs. In cases where there are multiple sidelink UEs that are available to serve as anchor nodes for sidelink positioning of a UE, the selection of the sidelink UEs to be used for the sidelink positioning may consider the synchronization references of the sidelink UEs. For example, sidelink UEs may be connected to a common synchronization reference. Sidelink UEs that belong to a set of synchronization references, may be given priority for sidelink positioning. Additionally or alternatively, different synchronization reference sets may have different priorities for sidelink positioning, e.g., based on the common synchronization reference.

**FIG. 4****,** by way of example, illustrates an environment 400 with a target UE 405T that is to perform sidelink positioning, and a number of sidelink UEs UEA-UEG, labeled 405A-405G, respectively (sometimes collectively referred to as UEs 405) that are available for sidelink positioning.

As illustrated, the target UE 405T may detect multiple sidelink UEs, UE 405 that are available for sidelink positioning, e.g., in a discover process illustrated by dotted line 406. The synchronization reference associated with each sidelink UE 405 may be determined by the target UE 405T, e.g., based on an in-coverage indicator, identifier, and priority level, e.g., in-coverage indicator *I*_{IC}, SLSS ID, and priority level, provided to the target UE 405T by each sidelink UE 405. As illustrated in FIG. 4, a first group of sidelink UEs, e.g., UEs 405A, 405B, 405C, and 405D, belongs to a first set 402 of sidelink UEs that share a first common synchronization reference, and a second group of sidelink UEs, e.g., UEs 405E and 405F, belongs to a second set 404 of sidelink UEs that share a second common synchronization reference, which is different than the first common synchronization reference for the first set 402. Additionally, sidelink UE 405G does not share a synchronization reference with either the first set 402 or the second set 404.

The target UE 405T may select sidelink UEs 405 for sidelink positioning, e.g., to be used as anchor nodes, based on the synchronization reference associated with each of the sidelink UEs 405. For example, in one implementation, all the sidelink UE's 405 that are connected to a common synchronization reference may be given a higher priority than sidelink UEs 405 that are not connected to a common synchronization reference. For example, sidelink UEs that are connected to the same synchronization reference (e.g., in set 402 or in set 404) will have a relatively small synchronization error among themselves. During positioning, all of the common synchronization reference may be measured in the same instance. Accordingly, sidelink UEs 405 within set 402 (or within set 404) will be given priority for sidelink positioning over sidelink UE 405G. Only after finishing all the sidelink measurements in one synchronization group, e.g., set 402, then the target UE 405T may move to different synchronization group, e.g., set 404.

Additionally or alternatively, the selection of the sidelink UEs for sidelink positioning may be measurement priority levels associated with different types of synchronization references. For example, the target UE 405T may obtain priority levels for positioning for different types of synchronization levels from the network, e.g., the location server such as LMF 120 or a serving base station, or from memory (e.g., predefined based on standards). The priority levels used for positioning, for example, may be defined as the same as the priority level defined in the SL data transmission, e.g., as illustrated in Table 1. Alternatively, separate priority rules may be used for the positioning use case. For example, referring to FIG. 4, the sidelink UEs 405 within set 402 may directly synchronized by a gNB/eNB or GNSS, while the sidelink UEs 405 within set 404 may by synchronized by a common SyncRef UE. Accordingly, if Table 1 is used to define priority levels, the sidelink UEs 405 in set 402 have a Priority Level 2 and the sidelink UEs 405 in set 404 have a Priority Level 3, and thus, the target UE 405T would select the sidelink UEs 405 in set 402 for sidelink positioning with higher preference (priority) over the sidelink UEs 405 in set 404.

Additionally or alternatively, in one implementation, all the sidelink UEs may provide the synchronization reference source in the measurements to the node that computes the position. By way of example, the positioning engine may be a location server, e.g., LMF 120 (or may be the target UE 405T), and each sidelink UEs may provide its synchronization reference source along with its measurements to the positioning engine. The positioning engine may use the synchronization reference information for position determination, e.g., using an advanced method, such as RANSAC. By way of example, the target UE 405T may obtain an RSTD measurement from sidelink UEs 405 in set 402 and another RSTD measurement from sidelink UEs 405 in set 404. If the sidelink UEs 405 in set 402 are better synchronized than the sidelink UEs 405 in set 404, the synchronization reference information may be used in the positioning engine, e.g. to down weight the RSTD measurements derived from the sidelink UEs 405 in set 404.

A UE may be configured to use the sidelink synchronization signal (e.g., S-SSB) from a SyncRef UE for data transfer, e.g., based on a measured signal strength. One synchronization configuration, however, may not be suitable for all use cases. For example, a synchronization configuration that is suitable for data transfer may not be suitable for sidelink positioning.

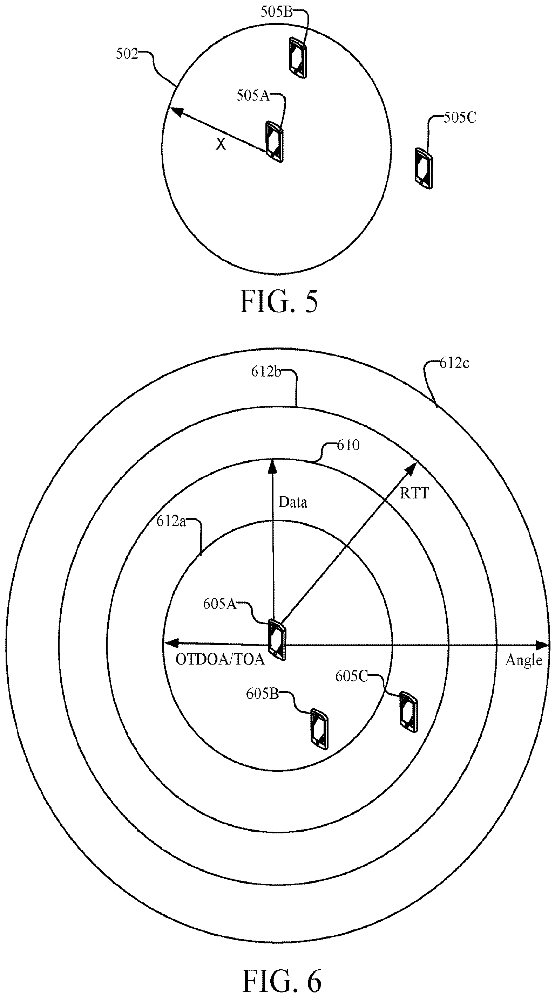

**FIG. 5****,** by way of example, illustrates an environment 500 showing a UE 505A serving as a SyncRef UE that transmits sidelink synchronization signals, e.g., S-SSB) received by UE 505B and UE 505C. FIG. 5, further illustrates with circle 502 a synchronization configuration, e.g., a preconfigured signal strength threshold with a value of "X", that may be used by UEs 505B and 505C to determine whether to use UE 505A as a SyncRef UE for sidelink data transfer. In order to use UE 505A as the SyncRef UE for mode 1 (e.g., where the network is involved) and mode 2 (e.g., where the network is not involved), the network, e.g., the serving gNB, location server (LMF 120), or one of the UEs, configures a synchronization quality metric, such as the signal strength or signal quality (e.g., RSRP, Signal to Interference & Noise Ratio (SINR), RSRQ, TOA-Quality, etc.) threshold. For example, in FIG. 5, the UEs 505B and 505C are configured with threshold X. All the UEs which decode the transmitting message from UE 505A with a signal quality metric (e.g., RSRP, SINR, RSRQ, TOA-Quality, etc.) greater than X, may be said to be synchronized with the UE 505A or are in the UE 505A synchronization group and may use the UE 505A as a SyncRef UE for sidelink data transfer. All the UEs that decode the transmitting message from UE 505A with a signal quality metric (e.g., RSRP, SINR, RSRQ, TOA-Quality, etc.) lower than X, may be said to be un-synchronized with the UE 505A and need to find some other synchronization group for sidelink data transfer.

One synchronization configuration, however, is not suitable for all use cases, such as both sidelink data transfer and sidelink positioning. Different sidelink use cases need different types of synchronization levels. For example, with a data transfer use case, moderate synchronization may be used, while for a positioning use case, moderate to tight synchronization is desirable. Moreover, within different position methods different synchronization levels may be required. For example, for positioning techniques using time difference of arrival, e.gl., OTDOA or TDOA techniques, the UE should have tight synchronization, whereas other techniques, such as RTT, may use moderate synchronization, and angle based methods, such as AoD or AoA, may use looser synchronization.

**FIG. 6****,** by way of example, illustrates an environment 600 showing a UE 605A serving as a SyncRef UE with multiple synchronization configurations, e.g., multiple preconfigured signal strength thresholds, illustrated as circles 610, and 612a, 612b, and 612c, that may be used to determine whether to use UE 605A as a SyncRef UE. Thus, different synchronization configurations may be used for different use cases, such as data session and positioning session.

For positioning use cases, the SyncRef UE, e.g., UE 605A, may be one of the anchor UEs. Alternatively, the Synch Ref UE, e.g., UE 605A, may be the UE that initiated the positioning session (i.e., the target UE). Additionally or alternatively, the Synch Ref UE, e.g., UE 605A, may be a sidelink UE in a discovered synchronization positioning cluster that has a synchronization reference source with higher priority, e.g., as in set 402 discussed above in reference to FIG. 4. The procedure to determine which synchronization configuration is fulfilled may be part of a positioning discovery phase.

For example, as illustrated by circle 610, a first synchronization quality (e.g., preconfigured signal strength) may be used for the synchronization for a data use case, whereas one or more different synchronization qualities (e.g., preconfigured signal strengths (illustrated by circles 612a, 612b, and 612c)) may be used for the synchronization for one or more positioning use cases. By way of example, for time sensitive synchronization positioning, such as RSTD, or OTDOA/TDOA use cases, a relatively tight synchronization may use a second synchronization quality, e.g., a second preconfigured signal strength illustrated by circle 612a. For positioning with less stringent time synchronization requirements, such as a RTT use case, a looser synchronization may use a third synchronization quality, e.g., a third preconfigured signal strength illustrated by circle 612b. For positioning with less stringent time synchronization requirements, such as angle based use cases (e.g., AoD or AoA), an even looser synchronization may use a fourth synchronization quality, e.g., a fourth preconfigured signal strength illustrated by circle 612c.

In some implementations, two UE may be simultaneously in the same synchronization group for a first use case, but be in different synchronization group of a different use case, such as data and positioning use cases or different positioning methods.

In example, the UE 605A illustrated in FIG. 6 may serve as the SyncRef UE for a sidelink positioning session that involves UEs 605B and 605C. The UE 605A may be an anchor UE or may be the target UE for the positioning session, and the UEs 605B and 605B may be anchor UEs or one may be the target UE. As illustrated, the UEs 605B and 605C are in a synchronization quality range from UE 605A such that both the UE 605B and UE 605C can decode the UE 605A data/control channel with a synchronization quality, e.g., signal quality metric (e.g., RSRP, SINR, RSRQ, TOA-Quality, etc.) greater than what is required for sidelink data transfer (illustrated by circle 610), and thus, the UEs 605B and 605C may use UE 605A as the SyncRef UE for sidelink data transfer. On the other hand, while the synchronization quality determined by UE 605B is in the range required for time sensitive synchronization positioning, such as RSTD, or OTDOA/TDOA use cases (illustrated by circle 612a), the synchronization quality determined by UE 605C is outside the range required for time sensitive synchronization positioning (illustrated by circle 612a). Both UE 605B and UE 605C, however, are in the range required for time less stringent time synchronization requirements, such as a RTT use case or an angle based use case, illustrated by circles 612b or 612c, respectively. Accordingly, the UEs 605B and 605C (as either anchor nodes or a target UE) may use UE 605A as the SyncRef UE for sidelink positioning using less stringent time synchronization requirements, e.g., RTT or angle based positioning, but not sidelink positioning using time sensitive synchronization positioning, such as RSTD, or OTDOA/TDOA.

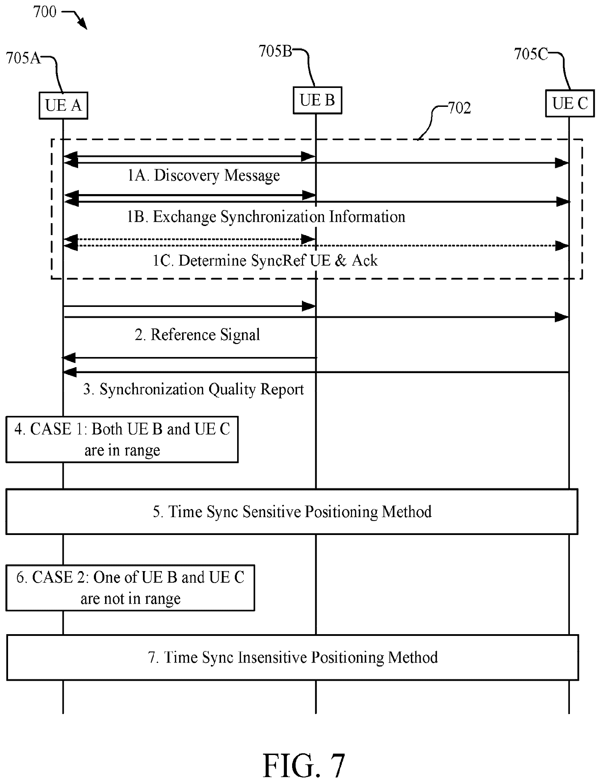

**FIG. 7** is a signal flow 700 illustrating the signaling between UEA 705A, UEB 705B, and UEC 705C for sidelink positioning, during which synchronization information is used to determine a mode 2 sidelink positioning method, in which the network is not utilized, as discussed herein. The UEA 705A, UEB 705B, and UEC 705C, sometimes collectively referred to as UE 705, may be, e.g., one of UE 105A or 105B shown in FIG. 1A. As discussed herein, the UEA 705A may operate as the SyncRef UE, and may further operate as the target UE and positioning entity, and UEB 705B and UEC 705C operate as anchor nodes. It should be understood, however, that UEB 705B or UEC 705C, or another UE that is not shown, may be the target UE or may operate as the positioning entity. It should be understood that FIG. 7 illustrates messages that are related to selecting anchor UEs and the positioning method of the target UEA 705A, as discussed herein, but that additional messages, including conventional LPP messages, or fewer messages may be included in the message flow 700. For example, messaging to establish the positioning session, determining capabilities, exchanging assistance data, etc., may be included.

At stage 1, illustrated with dotted lines 702, a discovery phase may be implemented to detect sidelink UEs that are available to operate as anchor nodes for sidelink positioning.

For example, at stage 1A, discovery messages may be exchanged between UEA 705A and the UEs 705B and 705C, to determine which sidelink UEs that are nearby and available to participate in sidelink positioning of the target UEA 705A, e.g., as anchor nodes.

At stage 1B, messages including synchronization information are exchanged, e.g., transmitted and received, between target UEA 705A and UEs 705B and 705C. The synchronization information for each UE, for example, may include an identification of the synchronization reference source, the priority level, and quality of synchronization. By way of example, the synchronization information may include at least the in-coverage indicator *I*_{IC}, SLSS ID, and priority level, as discussed in reference to FIG. 4. It should be understood that the synchronization information may be exchanged between target UEA 705A and many sidelink UEs, e.g., more than illustrated in FIG. 7, and that sidelink UEs, e.g., UEs 705B and 705C, may be selected based on the synchronization reference associated with each sidelink UE, as discussed in reference to FIG. 4. For example, UE 705B and 705C may be selected for sidelink positioning based on each UE having a common synchronization reference source, e.g., being in the same synchronization set with UE 705A. The selection of the UEs for sidelink positioning may be performed by a UE, e.g., UE 705A for mode 2 or by a network entity for mode 1. The quality of the synchronization that may be exchanged, for example, may be a signal quality metric (e.g., RSRP, SINR, RSRQ, TOA-Quality, etc.) of the synchronization reference signal received by each UE.

At stage 1C, a single UE may be selected as the SyncRef UE for the SL positioning session. For example, the SyncRef UE may be selected based on the synchronization reference source or priority level, e.g., a UE synchronized with a gNB/eNB may be selected as SyncRef UE over a UE synchronized with GNSS, and a UE directly synchronized to a gNB/eNB (Priority Level 2 in Table 1) is selected over UEs that are synchronized with other UEs or with their own clock (Priority Level 3-8). Additionally, the quality of synchronization may be used to select the SyncRef UE, e.g., multiple UEs are directly synchronized with a gNB/eNB, the UE with the best quality synchronization may be selected as the SyncRef UE for the SL positioning session. For sake of discussion, UEA 705A in FIG. 7 will be assumed to be the SyncRef UE for the SL positioning session. In some implementations, messages identifying the SyncRef UE may be transmitted and acknowledged between the UEs, while in other implementations, the selection of the SyncRef UE may be determined by each separate UE 705 based on the same synchronization information and rules thereby obviating the need for messaging to identify the selected SyncRef UE.

After detecting and selecting the sidelink UEs for sidelink positioning, the synchronization quality for each of the sidelink UEs (UE 705B and 705C) with respect to the selected SyncRef UE (UE 705A) is determined and used to select a positioning method for the sidelink positioning, e.g., as discussed in reference to FIG. 6.

For example, at stage 2, the UEA 705A transmits reference signals to each of the sidelink UEs 705B and 705C. The reference signal, for example, may be a PBCH DMRS, SL-PRS, SL-DMRS, SL-SSB, SL-CSIRS, SL-SRS, or other similar signal. Each sidelink UE 705B and 70C measures a synchronization quality, e.g., signal quality metric, such as the RSRP, SINR, RSRQ, TOA-Quality, etc., of the reference signal received from UE 705A.

At stage 3, the sidelink UEs 705B and 705C sends a report with the synchronization quality measurement generated at stage 2 to the UEA 705A. In an implementation where the target UE (and/or positioning engine) is not UEA 705A, the report with the signal quality measurement generated at stage 2 may be sent by the sidelink UEs 705B and 70C to the target UE (and/or positioning engine) or the UEA 705A may transmit the signal quality measurement information for all sidelink UEs to the target UE (and/or positioning engine).

Stage 4 illustrates a first case in which the UEA 705A (or the target UE and/or positioning engine) determines, based on the synchronization quality reports received at stage 3, that both UEB 705B and UEC 705C are within a same synchronization quality range for a positioning method with a time sensitive synchronization requirement, which is different than the synchronization quality requirement for sidelink data transfer, e.g., as illustrated by circles 612a and 610, respectively in FIG. 6. In an implementation where the target UE (and/or positioning engine) is not UEA 705A, the UEA 705A may transmit the synchronization quality range determination for the sidelink UEs to the target UE (and/or positioning engine).

At stage 5, because it is determined that both UEB 705B and UEC 705C are within a same synchronization quality range for a positioning method with a time sensitive synchronization requirement, a sidelink positioning may be performed using a positioning method having a time sensitive synchronization requirement, such as RSTD, OTDOA, TDOA, e.g., using sidelink UEs 705B and 705C as anchor nodes.

Stage 6 illustrates a second case in which the UEA 705A (or the target UE and/or positioning engine) determines, based on the synchronization quality reports received at stage 3, that both UEB 705B and UEC 705C are not within a same synchronization quality range for a positioning method with a time sensitive synchronization requirement, which is different than the synchronization quality requirement for sidelink data transfer, e.g., as illustrated by circles 612a and 610, respectively in FIG. 6. In some implementations, there may be a plurality of synchronization quality ranges associated with different positioning methods, e.g., illustrated as circles 612a, 612b, and 612c in FIG. 6, and the UEA 705A may determine which synchronization quality range that both UEB 705B and UEC 705C are within. In an implementation where the target UE (and/or positioning engine) is not UEA 705A, the UEA 705A may transmit the synchronization quality range determination for the sidelink UEs to the target UE (and/or positioning engine).

At stage 7, because it is determined that both UEB 705B and UEC 705C are not within the same synchronization quality range for a positioning method with a time sensitive synchronization requirement, a sidelink positioning may be performed using a positioning method that has a less time sensitive synchronization requirement, such as RTT or angle based positioning, e.g., using sidelink UEs 705B and 705C as anchor nodes.

Various examples of selecting UEs for SL positioning based on associated synchronization group, and the selection of positioning method used for SL positioning based on synchronization quality is provided.

For the sake of a first example, referring back to FIG. 2, both UE 205A and 205B have priority level 2, but have different synchronization reference source, i.e., UE 205A is connected to gBN1 210A and UE 205B is connected to gNB2 210B. The network, e.g., LMF 120 or serving gNB, may provide the detail of the synchronization configuration for two separate synchronization reference sources (e.g., different gNBs) that can be used for defining a synchronization group (e.g., Real Time Difference-RTD- information). Different synchronization ranges may be used for sidelink data transfer and sidelink positioning uses cases. The network, e.g., LMF 120 or serving gNB may define the condition under which two UEs connected to different synchronization reference sources, e.g., different gNBs, can be used for time sensitive synchronization sidelink positioning methods, such as TDOA or RSTD based positioning methods.

In a second example, two UEs may have priority level 2 but belong to the same gNB, i.e., have the same synchronization reference source. For example, referring to FIG. 2, the UE 205A and another UE (not shown) may both be within coverage and connected to gNB1 210A. Different synchronization ranges may be used for sidelink data transfer and sidelink positioning uses cases. The two UEs, thus, may be used as tightly synchronized group. The network, e.g., LMF 120 or serving gNB may define the condition under which two UEs connected to the same synchronization reference source , e.g., the same gNB, can be used for time sensitive synchronization sidelink positioning methods, such as TDOA or RSTD based positioning methods.

In a third example, two UEs may belong to different priority levels, such as UE 205A and UE 205C shown in FIG. 2. For normal sidelink data use cases, these UEs cannot be considered as tightly synchronized. Nevertheless, for sidelink positioning use cases, these UEs may be considered as sufficiently synchronized for sidelink positioning, depending on the synchronization configuration defined by the network, e.g., LMF 120 or serving gNB. The network, e.g., LMF 120 or serving gNB, may provide an indication of the positioning method to be used for different levels of sidelink UEs.

In a fourth example, two UEs may have a priority level 4, such as UE 205D and another UE (not shown) in coverage of GNSS SV 190 shown in FIG. 2. The UEs may be considered as synchronized for sidelink positioning use case. The synchronization quality range required for positioning may vary, depending on the sidelink positioning use case, e.g., which positioning method is employed.

In a fifth example, there may be UEs having priority level 6, e.g., such as UE 205E and another UE (not shown) connected to UE 205D in FIG. 2. Depending on the synchronization configuration defined by the network, e.g., LMF 120 or serving gBN, priority level 6 UEs, that have a measurement quality greater than a predetermined threshold, may be considered sufficiently synchronized for sidelink positioning. Priority level 6 UEs with measurement quality less than the predetermined threshold, however, may be considered as unsynchronized for sidelink positioning. The network, e.g., LMF 120 or serving gNB, may provide the details of GNSS uncertainty values or fix quality thresholds that may be used to determine whether a priority level 6 UE is considered as synchronized for sidelink positioning.

In a sixth example, UEs that have priority level 7 and 8, such as UEs 205H, and 205I shown in FIG. 2, may be considered in a synchronized set for sidelink positioning, e.g., if the UEs are stationary and nearby. On the other hand, UEs that are mobile and/or distant may be considered as unsynchronized for sidelink positioning. The network, e.g., LMF 120 or serving gNB may define the conditions, including distance or signal quality metric threshold, under which priority level 7 and 8 UEs can be used for sidelink positioning.

In an industrial internet of things (IIOT) system, multiple UEs and devices may be connected to common clock source. In such a system with UEs and devices connected to a common clock source, the UEs and devices are well synchronized with each other. For example, the synchronization performance of a system of devices connected to a common clock source may be better than any other synchronization level defined, e.g., Table 1, because with use of the common clock the quality of accuracy of the synchronization source may be very high, e.g., ±1 nsec. Thus, such a configuration might be preferable for performing sidelink positioning methods that have a time sensitive synchronization requirement, such as TDOA or RSTD based positioning methods.

Accordingly, a priority level may be defined for sidelink synchronization reference based on connection to a common clock source. For example, a priority level 9, e.g., in addition to the priority levels illustrated in Table 1, may be used where all the UEs and sidelink devices are connected to one common clock source, which may be used for sidelink positioning. There may be multiple priority level 9 sets in an IIOT network.

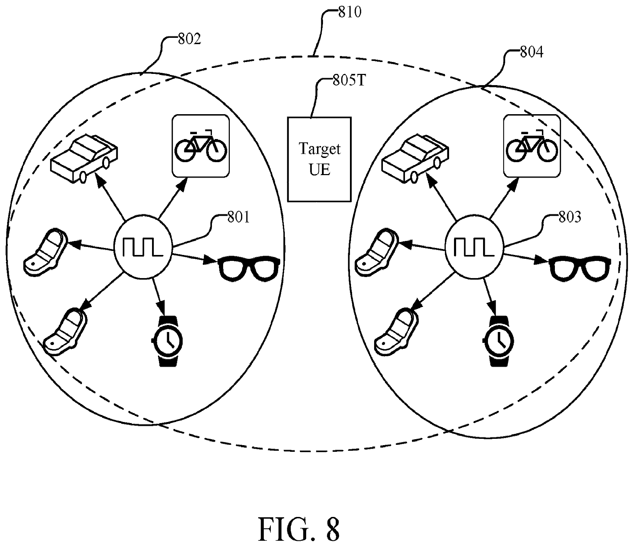

**FIG. 8****,** by way of example, illustrates an environment 800 that includes an IIOT network, including a first set 802 of IIOT devices connected to a first common clock source 801, and a second set 804 of IIOT devices connected to a second common clock source 803, where both sets 802 and 804 of devices are available for sidelink positioning with target UE 805T, as illustrated by dotted line 810. Each of the first set 802 and the second set 802 may be defined as a priority level 9 cluster of IIOT devices.

Within a priority level cluster, e.g., within first set 802 or within second set 804, the target UE 805T may perform sidelink positioning methods that have a time sensitive synchronization requirement, such as TDOA or RSTD based positioning methods. Between separate priority level 9 synchronization groups, e.g., between first set 802 and second set 804, the target UE 805T may perform sidelink positioning methods that have a lower time sensitive synchronization requirement, such as RTT/Range or angle based positioning methods.

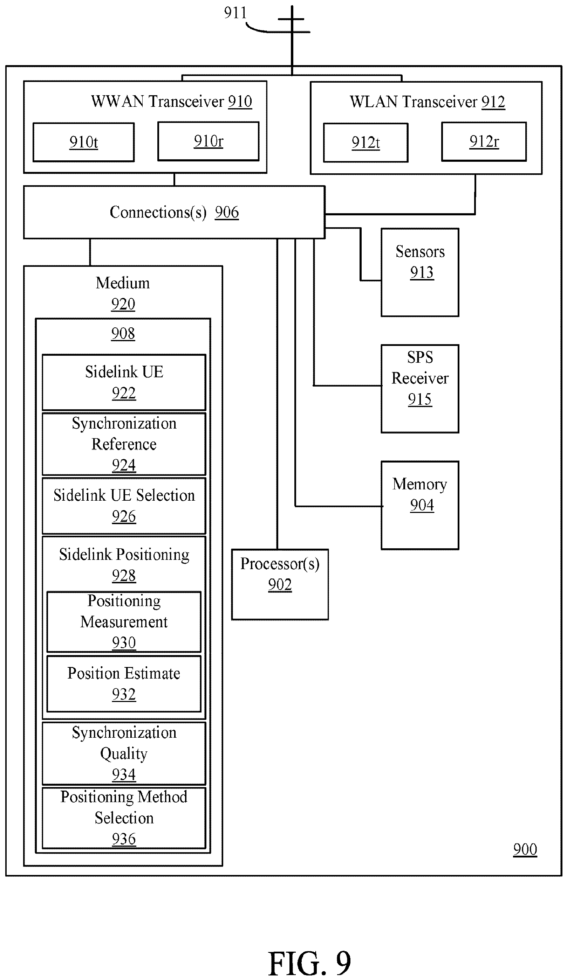

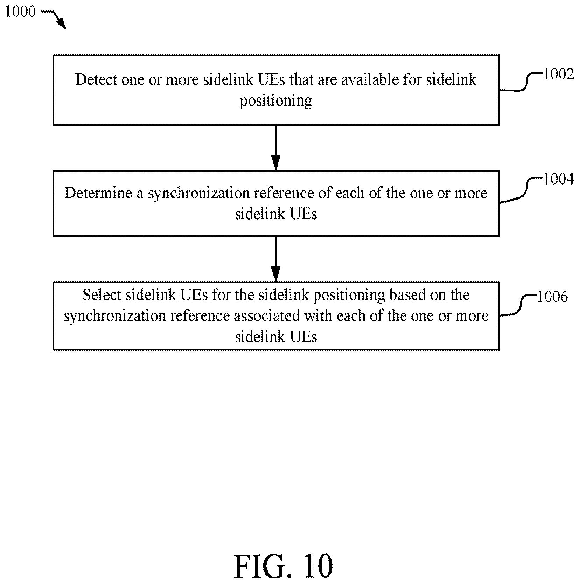

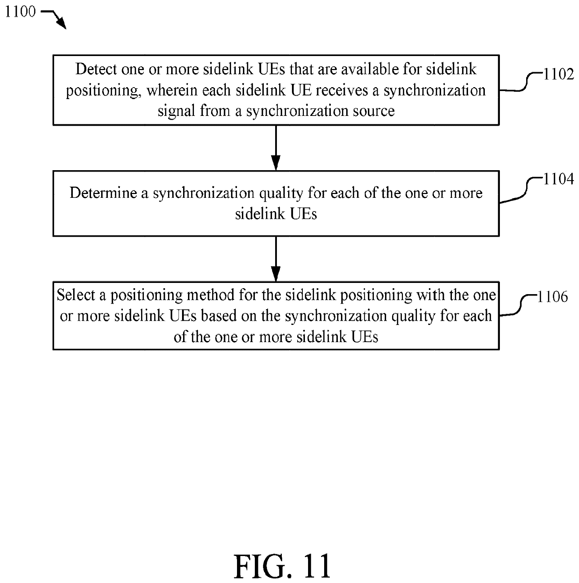

**FIG. 9** shows a schematic block diagram illustrating certain exemplary features of a UE 900, e.g., which may be the UE 105, 205, 305, 405, 505, 605, 705, 805 discussed in FIGs. 1A-8, that is configured to support sidelink positioning, as discussed herein. The UE 900, for example, may perform the processes illustrated in FIG. 4 and FIG. 8, the signal flow 700 shown in FIG. 7, and the processes 1000 and 1100 illustrated in FIGs. 10, and 11, and algorithms and techniques disclosed herein. The UE 900 may, for example, include one or more processors 902, memory 904, an external interface such as at least one wireless transceiver (e.g., wireless network interface) illustrated as Wireless Wide Area Network (WWAN) transceiver 910 and Wireless Local Area Network (WLAN) transceiver 912, SPS receiver 915, and one or more sensors 913, which may be operatively coupled with one or more connections 906 (e.g., buses, lines, fibers, links, etc.) to non-transitory computer readable medium 920 and memory 904. The wireless transceiver (e.g. WWAN transceiver 910 and/or WLAN transceiver 912) may further include transceivers for Wireless Personal Area Network (WPAN), Wireless Metropolitan Area Network (WMAN), etc. The SPS receiver 915, for example, may receive and process SPS signals from SVs 190 shown in FIG. 1A. The one or more sensors 913, for example, may include a barometer and/or an inertial measurement unit (IMU) that may include one or more accelerometers, one or more gyroscopes, a magnetometer, etc. The UE 900 may further include additional items, which are not shown, such as a user interface that may include e.g., a display, a keypad or other input device, such as virtual keypad on the display, through which a user may interface with the UE. In certain example implementations, all or part of UE 900 may take the form of a chipset, and/or the like.

The at least one wireless transceiver may be a transceiver 910 for a WWAN communication system and a transceiver 912 for a WLAN communication system, or may be a combined transceiver for both WWAN and WLAN. The WWAN transceiver 910 may include a transmitter 910t and receiver 910r coupled to one or more antennas 911 for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The WLAN transceiver 912 may include a transmitter 912t and receiver 912r coupled to one or more antennas 911 or to separate antennas, for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The transmitters 910t and 912t may include multiple transmitters that may be discrete components or combined/integrated components, and/or the receivers 910r and 912r may include multiple receivers that may be discrete components or combined/integrated components. The WWAN transceiver 910 may be configured to communicate signals (e.g., with base stations and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), etc. New Radio (NR) may use mm-wave frequencies and/or sub-6GHz frequencies. The WLAN transceiver 912 may be configured to communicate signals (e.g., with access points and/or one or more other devices) according to a variety of radio access technologies (RATs) such as 3GPP LTE-V2X (PC5), IEEE 802.11 (including IEEE 802.11p), WiFi, WiFi Direct (WiFi-D), Bluetooth^{®}, Zigbee etc. The wireless transceivers 910 and 912 may be communicatively coupled to a transceiver interface, e.g., by optical and/or electrical connection, which may be at least partially integrated with the wireless transceivers 910 and 912.

In some embodiments, UE 900 may include antenna 911, which may be internal or external. UE antenna 911 may be used to transmit and/or receive signals processed by wireless transceivers 910 and 912. In some embodiments, UE antenna 911 may be coupled to wireless transceivers 910 and 912. In some embodiments, measurements of signals received (transmitted) by UE 900 may be performed at the point of connection of the UE antenna 911 and wireless transceivers 910 and 912. For example, the measurement point of reference for received (transmitted) RF signal measurements may be an input (output) terminal of the receiver 910r (transmitter 910t) and an output (input) terminal of the UE antenna 911. In a UE 900 with multiple UE antennas 911 or antenna arrays, the antenna connector may be viewed as a virtual point representing the aggregate output (input) of multiple UE antennas. In some embodiments, UE 900 may measure received signals including signal strength and TOA measurements and the raw measurements may be processed by the one or more processors 902.

The one or more processors 902 may be implemented using a combination of hardware, firmware, and software. For example, the one or more processors 902 may be configured to perform the functions discussed herein by implementing one or more instructions or program code 908 on a non-transitory computer readable medium, such as medium 920 and/or memory 904. In some embodiments, the one or more processors 902 may represent one or more circuits configurable to perform at least a portion of a data signal computing procedure or process related to the operation of UE 900.

The medium 920 and/or memory 904 may store instructions or program code 908 that contain executable code or software instructions that when executed by the one or more processors 902 cause the one or more processors 902 to operate as a special purpose computer programmed to perform the techniques disclosed herein. As illustrated in UE 900, the medium 920 and/or memory 904 may include one or more components or modules that may be implemented by the one or more processors 902 to perform the methodologies described herein. While the components or modules are illustrated as software in medium 920 that is executable by the one or more processors 902, it should be understood that the components or modules may be stored in memory 904 or may be dedicated hardware either in the one or more processors 902 or off the processors.

A number of software modules and data tables may reside in the medium 920 and/or memory 904 and be utilized by the one or more processors 902 in order to manage both communications and the functionality described herein. It should be appreciated that the organization of the contents of the medium 920 and/or memory 904 as shown in UE 900 is merely exemplary, and as such the functionality of the modules and/or data structures may be combined, separated, and/or be structured in different ways depending upon the implementation of the UE 900.

The medium 920 and/or memory 904 may include a sidelink UE module 922 that when implemented by the one or more processors 902 configures the one or more processors 902 to detect multiple sidelink UEs that are available for sidelink positioning, e.g., using discovery messages exchanged with sidelink UEs transmitted and received via at least one of the wireless transceivers 910, 912.

The medium 920 and/or memory 904 may include a synchronization reference module 924 that when implemented by the one or more processors 902 configures the one or more processors 902 to determine a synchronization reference of multiple sidelink UEs that are available for sidelink positioning, e.g., by transmitting and receiving synchronization information, via at least one of the wireless transceivers 910, 912. The synchronization information, by way of example, may include parameters such as in-coverage indicator *I*_{IC}, SLSS ID, priority level, quality of the synchronization, e.g., signal quality metric of the synchronization reference signal, etc. In some implementations, the one or more processors 902 may be further configured to select a sidelink UE as the SyncRef UE for a sidelink SL positioning session, e.g., based on the synchronization reference information, such as the synchronization reference source or priority level, quality of synchronization, etc. The one or more processors 902 may be further configured to transmit or receive (and optionally to acknowledge) the identity of the selected SyncRef UE to/from other UEs, via at least one of the wireless transceivers 910, 912.

The medium 920 and/or memory 904 may include a sidelink UE selection module 926 that when implemented by the one or more processors 902 configures the one or more processors 902 to select sidelink UEs for the sidelink positioning based on the synchronization reference associated with each of the multiple sidelink UEs. For example, as discussed above, the sidelink UEs may be selected based on one or more parameters including having a common synchronization reference, priority level, quality of the synchronization, etc.

The medium 920 and/or memory 904 may include a sidelink positioning module 928 that when implemented by the one or more processors 902 configures the one or more processors 902 to perform, via at least one of the wireless transceivers 910, 912, sidelink positioning using one or more sidelink UEs. The sidelink positioning module 928 may include one or more sub-modules as illustrated.

The medium 920 and/or memory 904 may include a positioning measurement module 930 that when implemented by the one or more processors 902 configures the one or more processors 902 to perform positioning measurements for sidelink UEs, e.g., measurements of signals from the sidelink UEs received via at least one of the wireless transceivers 910, 912, or to send positioning reference signals to sidelink UEs, via at least one of the wireless transceivers 910, 912, and to receive the positioning measurements from the sidelink UEs, via at least one of the wireless transceivers 910, 912. In some implementations, the one or more processors 902 may be configured to receive synchronization reference sources from the sidelink UEs along with the positioning measurements, via at least one of the wireless transceivers 910, 912.

The medium 920 and/or memory 904 may include a position estimate module 932 that when implemented by the one or more processors 902 configures the one or more processors 902 to determine an estimated position of the UE based at least in part on the positioning measurements performed by the UE or positioning measurements received from sidelink UEs. The one or more processors 902 may be configured to determine the position estimate based on a selected positioning method, which may be selected based on synchronization quality of each sidelink UE. Additional information may be used for determining the UE position, such as known positions of sidelink UEs (serving as anchor nodes). In some implementations, the synchronization reference source for each of the sidelink UEs additionally may be used for determining the estimated position of the UE, e.g., by weighting positioning measurements from different sidelink UEs based on their synchronization reference information, e.g., better synchronized sidelink UEs may be given higher weight for positioning measurements requiring a high degree of synchronization, such as RSTD measurements.

The medium 920 and/or memory 904 may include a synchronization quality module 934 that when implemented by the one or more processors 902 configures the one or more processors 902 to determine a synchronization quality for each of the selected sidelink UEs. For example, the one or more processors 902 may be configured to transmit reference signals to each sidelink UE, e.g., via at least one of the wireless transceivers 910, 912, and to receive a report of a signal strength measurement or a synchronization quality measurement, or a time or arrival (TOA) measurement quality of the reference signals from each sidelink UE, via at least one of the wireless transceivers 910, 912, and to determine the synchronization quality for each of the selected sidelink UEs based on the reports.

The medium 920 and/or memory 904 may include a positioning method selection module 936 that when implemented by the one or more processors 902 configures the one or more processors 902 to select a positioning method for the sidelink positioning with the sidelink UEs based on the synchronization quality for each of the sidelink UEs. For example, the one or more processors 902 may be configured to determine a range of the synchronization quality of each sidelink UE and to select the positioning method based on the determined range. For example, a first positioning method for the sidelink positioning, such as a time synchronization sensitive positioning method (e.g., TDOA), may be selected if each of sidelink UE has a synchronization quality that is within a first range, a second positioning method for the sidelink positioning, such as a positioning method that is less time synchronization sensitive than the first positioning method (e.g., RTT), may be selected if at least one of the sidelink UEs has a synchronization quality that is outside the first range required for the first positioning method and each of the sidelink UEs has a synchronization quality that is within a second range. A third positioning method for the sidelink positioning, such as a positioning method that is less time synchronization sensitive than the second positioning method (e.g., an angle based positioning technique), may be selected if at least one of sidelink UEs has a synchronization quality that is outside the first range and the second range and each of the sidelink UEs has the synchronization quality that is within a third range.

The methodologies described herein may be implemented by various means depending upon the application. For example, these methodologies may be implemented in hardware, firmware, software, or any combination thereof. For a hardware implementation, the one or more processors 902 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 920 or memory 904 that is connected to and executed by the one or more processors 902. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 908 on a non-transitory computer readable medium, such as medium 920 and/or memory 904. Examples include computer readable media encoded with a data structure and computer readable media encoded with a computer program code 908. For example, the non-transitory computer readable medium including program code 908 stored thereon may include program code 908 to support sidelink positioning in a manner consistent with disclosed embodiments. Non-transitory computer readable medium 920 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 908 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 920, instructions and/or data may be provided as signals on transmission media included in a communication apparatus. For example, a communication apparatus may include a wireless transceiver 910 having signals indicative of instructions and data. The instructions and data are configured to cause one or more processors to implement the functions outlined in the claims. That is, the communication apparatus includes transmission media with signals indicative of information to perform disclosed functions.

Memory 904 may represent any data storage mechanism. Memory 904 may include, for example, a primary memory and/or a secondary memory. Primary memory may include, for example, a random access memory, read only memory, etc. While illustrated in this example as being separate from one or more processors 902, it should be understood that all or part of a primary memory may be provided within or otherwise co-located/coupled with the one or more processors 902. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 920. As such, in certain example implementations, the methods and/or apparatuses presented herein may take the form in whole or part of a computer readable medium 920 that may include computer implementable program code 908 stored thereon, which if executed by one or more processors 902 may be operatively enabled to perform all or portions of the example operations as described herein. Computer readable medium 920 may be a part of memory 904.

**FIG. 10** shows a flowchart for an exemplary method 1000, e.g., performed by a UE, such as UE 105, 205, 305, 405, 505, 605, 705, 805, 900 discussed in FIGs. 1A-9, to support sidelink positioning of the UE, in a manner consistent with disclosed implementation.

At block 1002, the UE detects one or more sidelink UEs that are available for sidelink positioning, e.g., as discussed in FIGs. 4 and 8, and block 702, such as stage 1A, of FIG. 7. A means for detecting one or more sidelink UEs that are available for sidelink positioning may be, e.g., one of transceiver 910, 912 and one or more processors 902 with dedicated hardware or implementing executable code or software instructions in memory 904 and/or medium 920, such as the sidelink UE module 922 of UE 900.

At block 1004, the UE determines a synchronization reference of each of the one or more sidelink UEs, e.g., as discussed in FIGs. 4 and 8, and block 702, such as stage 1B, of FIG. 7. A means for determining a synchronization reference of each of the one or more sidelink UEs may be, e.g., one of transceiver 910, 912 and one or more processors 902 with dedicated hardware or implementing executable code or software instructions in memory 904 and/or medium 920, such as the synchronization reference module 924 of UE 900.

At block 1006, the UE selects sidelink UEs for the sidelink positioning based on the synchronization reference associated with each of the one or more sidelink UEs, e.g., as discussed in FIGs. 4 and 8, and block 702, such as stage 1B, of FIG. 7. A means for selecting sidelink UEs for the sidelink positioning based on the synchronization reference associated with each of the one or more sidelink UEs may be, e.g., one of transceiver 910, 912 and one or more processors 902 with dedicated hardware or implementing executable code or software instructions in memory 904 and/or medium 920, such as the sidelink UE selection module 926 of UE 900.

In some implementations, the UE may select the sidelink UEs for the sidelink positioning based on the synchronization reference associated with each of the one or more sidelink UEs by selecting sidelink UEs that have a common synchronization reference with a higher priority than sidelink UEs that have different synchronization references, e.g., as discussed in FIGs. 2, 4 and 8, Table 1, and block 702, such as stage 1B, of FIG. 7. A means for selecting sidelink UEs that have a common synchronization reference with a higher priority than sidelink UEs that have different synchronization references may be, e.g., one of transceiver 910, 912 and one or more processors 902 with dedicated hardware or implementing executable code or software instructions in memory 904 and/or medium 920, such as the sidelink UE selection module 926 of UE 900.

The UE may perform sidelink positioning with the selected sidelink UEs, by performing first positioning measurements for a first set of sidelink UEs that have the common synchronization reference, and performing second positioning measurements for a second set of sidelink UEs that have a second common synchronization reference after finishing the first positioning measurements, e.g., as discussed in FIG. 8. A means for performing sidelink positioning with the selected sidelink UEs may be, e.g., one of transceiver 910, 912 and one or more processors 902 with dedicated hardware or implementing executable code or software instructions in memory 904 and/or medium 920, such as the sidelink positioning module 928 of UE 900. A means for performing first positioning measurements for a first set of sidelink UEs that have the common synchronization reference and a means for performing second positioning measurements for a second set of sidelink UEs that have a second common synchronization reference after finishing the first positioning measurements may be, e.g., one of transceiver 910, 912 and one or more processors 902 with dedicated hardware or implementing executable code or software instructions in memory 904 and/or medium 920, such as the sidelink positioning module 928 and the positioning measurement module 930 of UE 900.

In some implementations, the UE may select the sidelink UEs for the sidelink positioning based on the synchronization reference associated with each of the one or more sidelink UEs based on measurement priority levels associated with different types of synchronization references, e.g., as discussed in FIGs. 2, 4 and 8, Table 1, and block 702, such as stage 1B, of FIG. 7. In some implementations, the measurement priority levels, for example, may be defined by priority levels for sidelink data transmission, e.g., as discussed in FIGs. 2, 4 and 8, Table 1, and block 702, such as stage 1B, of FIG. 7. In some implementations, the measurement priority levels may be different for different positioning methods, e.g., as discussed in FIGs. 2, 4 and 8, Table 1, and block 702, such as stage 1B, of FIG. 7.

In one implementation, the UE may receive a synchronization reference source with positioning measurements from each of the sidelink UEs, e.g., as discussed in FIG. 4. The UE may determine an estimated position of the UE based at least in part on the positioning measurements and the synchronization reference source for each of the sidelink UEs, e.g., as discussed in FIG. 4. A means for receiving a synchronization reference source with positioning measurements from each of the sidelink UEs may be, e.g., one of transceiver 910, 912 and one or more processors 902 with dedicated hardware or implementing executable code or software instructions in memory 904 and/or medium 920, such as the positioning measurement module 930 of UE 900. A means for determining an estimated position of the UE based at least in part on the positioning measurements and the synchronization reference source for each of the sidelink UEs may be, e.g., one or more processors 902 with dedicated hardware or implementing executable code or software instructions in memory 904 and/or medium 920, such as the position estimate module 932 of UE 900.

In one implementation, the UE may determine a synchronization quality for each of the selected sidelink UEs, e.g., as discussed in stages 2 and 3 of FIG. 7. The UE may select a positioning method for the sidelink positioning with the sidelink UEs based on the synchronization quality for each of the sidelink UEs, e.g., as discussed in stages 4 and 6 of FIG. 7. A means for determining a synchronization quality for each of the selected sidelink UEs may be, e.g., one of transceiver 910, 912 and one or more processors 902 with dedicated hardware or implementing executable code or software instructions in memory 904 and/or medium 920, such as the synchronization quality module 934 of UE 900. A means for selecting a positioning method for the sidelink positioning with the sidelink UEs based on the synchronization quality for each of the sidelink UEs may be, e.g., one or more processors 902 with dedicated hardware or implementing executable code or software instructions in memory 904 and/or medium 920, such as the positioning method selection module 936 of UE 900.

**FIG. 11** shows a flowchart for an exemplary method 1000, e.g., performed by a UE, such as UE 105, 205, 305, 405, 505, 605, 705, 805, 900 discussed in FIGs. 1A-9, to support sidelink positioning of the UE, in a manner consistent with disclosed implementation.

At block 1102, the UE detects one or more sidelink UEs that are available for sidelink positioning, wherein each sidelink UE is synchronized with a synchronization source, e.g., as discussed in FIGs. 4 and 8, and block 702, such as stage 1A, of FIG. 7. For example, each sidelink UE may receive a synchronization signal from a synchronization source, e.g., as discussed in FIGs. 4 and 8, and block 702, such as stage 1A, of FIG. 7. A means for detecting one or more sidelink UEs that are available for sidelink positioning, wherein each sidelink UE is synchronized with a synchronization source may be, e.g., one of transceiver 910, 912 and one or more processors 902 with dedicated hardware or implementing executable code or software instructions in memory 904 and/or medium 920, such as the sidelink UE module 922 of UE 900.

At block 1104, the UE determine a synchronization quality for each of the selected sidelink UEs, e.g., as discussed in stages 2 and 3 of FIG. 7. A means for determining a synchronization quality for each of the selected sidelink UEs may be, e.g., one of transceiver 910, 912 and one or more processors 902 with dedicated hardware or implementing executable code or software instructions in memory 904 and/or medium 920, such as the synchronization quality module 934 of UE 900.

At block 1106, the UE may select a positioning method for the sidelink positioning with the one or more sidelink UEs based on the synchronization quality for each of the one or more sidelink UEs, e.g., as discussed in FIG. 6 and stages 4 and 6 of FIG. 7. A means for selecting a positioning method for the sidelink positioning with the one or more sidelink UEs based on the synchronization quality for each of the one or more sidelink UEs may be, e.g., one or more processors 902 with dedicated hardware or implementing executable code or software instructions in memory 904 and/or medium 920, such as the positioning method selection module 936 of UE 900.

In one implementation, the synchronization quality for the positioning method is different than a synchronization quality requirement for sidelink data transfer, e.g., as discussed in FIG. 6 and stages 4 and 6 of FIG. 7.

In one implementation, the UE may be the synchronization source of one or more of the one or more sidelink UEs, and the UE may determine the synchronization quality for each of the one or more sidelink UEs by transmitting reference signals to each of the one or more sidelink UEs, e.g., as discussed in stage 2 of FIG. 7. The UE may receive a report of a signal strength measurement or a synchronization quality measurement, or a time or arrival (TOA) measurement quality of the reference signals from each of the one or more sidelink UEs, e.g., as discussed in stage 3 of FIG. 7. A means for transmitting reference signals to each of the one or more sidelink UEs may be, e.g., one of transceiver 910, 912 and one or more processors 902 with dedicated hardware or implementing executable code or software instructions in memory 904 and/or medium 920, such as the synchronization quality module 934 of UE 900. A means for receiving a report of a signal strength measurement or a synchronization quality measurement, or a time or arrival (TOA) measurement quality of the reference signals from each of the one or more sidelink UEs may be, e.g., one of transceiver 910, 912 and one or more processors 902 with dedicated hardware or implementing executable code or software instructions in memory 904 and/or medium 920, such as the synchronization quality module 934 of UE 900.

In one implementation, the UE may select the positioning method for the sidelink positioning with the one or more sidelink UEs based on the synchronization quality for each of the one or more sidelink UEs by selecting a first positioning method for the sidelink positioning if each of the one or more sidelink UEs have a synchronization quality that is within a first range required for the first positioning method, e.g., as discussed in FIG. 6 and stages 4 and 5 of FIG. 7. The UE may select a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method, e.g., as discussed in FIG. 6 and stages 6 and 7 of FIG. 7. In one implementation, the first positioning method may be a time synchronization sensitive positioning method, and the second positioning method may be less time synchronization sensitive than the first positioning method, e.g., as discussed in FIG. 6 and stages 4-7 of FIG. 7. A means for selecting a first positioning method for the sidelink positioning if each of the one or more sidelink UEs have a synchronization quality that is within a first range required for the first positioning method may be, e.g., one or more processors 902 with dedicated hardware or implementing executable code or software instructions in memory 904 and/or medium 920, such as the positioning method selection module 936 of UE 900. A means for selecting a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method may be, e.g., one or more processors 902 with dedicated hardware or implementing executable code or software instructions in memory 904 and/or medium 920, such as the positioning method selection module 936 of UE 900.

In one implementation, the UE may select a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method, e.g., as discussed in FIG. 6. For example, the first positioning method may include a time difference of arrival positioning technique, the second positioning method may include a round trip time positioning technique, and the third positioning method may include an angle based positioning technique, e.g., as discussed in FIG. 6. A means for selecting a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method may be, e.g., one or more processors 902 with dedicated hardware or implementing executable code or software instructions in memory 904 and/or medium 920, such as the positioning method selection module 936 of UE 900.

Substantial variations may be made in accordance with specific desires. For example, customized hardware might also be used, and/or particular elements might be implemented in hardware, software (including portable software, such as applets, etc.), or both. Further, connection to other computing devices such as network input/output devices may be employed.

Configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of ±20% or ±10%, ±5%, or +0.1% from the specified value, as such variations are appropriate in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as such variations are appropriate in the context of the systems, devices, circuits, methods, and other implementations described herein.

As used herein, including in the claims, "or" as used in a list of items prefaced by "at least one of" or "one or more of" indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.). Also, as used herein, unless otherwise stated, a statement that a function or operation is "based on" an item or condition means that the function or operation is based on the stated item or condition and may be based on one or more items and/or conditions in addition to the stated item or condition.

As used herein, a mobile device, user equipment (UE), or mobile station (MS) refers to a device such as a cellular or other wireless communication device, a smartphone, tablet, personal communication system (PCS) device, personal navigation device (PND), Personal Information Manager (PIM), Personal Digital Assistant (PDA), laptop or other suitable mobile device which is capable of receiving wireless communication and/or navigation signals, such as navigation positioning signals. The term "mobile station" (or "mobile device". "wireless device" or "user equipment") is also intended to include devices which communicate with a personal navigation device (PND), such as by short-range wireless, infrared, wireline connection, or other connection - regardless of whether satellite signal reception, assistance data reception, and/or position-related processing occurs at the device or at the PND. Also, a "mobile station" or "user equipment" is intended to include all devices, including wireless communication devices, computers, laptops, tablet devices, etc., which are capable of communication with a server, such as via the Internet, WiFi, or other network, and to communicate with one or more types of nodes, regardless of whether satellite signal reception, assistance data reception, and/or position-related processing occurs at the device, at a server, or at another device or node associated with the network. Any operable combination of the above are also considered a "mobile station" or "user equipment." A mobile device or user equipment (UE) may also be referred to as a mobile terminal, a terminal, a device, a Secure User Plane Location Enabled Terminal (SET), a target device, a target, or by some other name.

In an embodiment, a first example independent claim may include a method for supporting location of a user equipment (UE) at a first wireless node, comprising receiving a first request for broadcast of an increased quantity of location-related information, the broadcast based on a wireless access type for the first wireless node; and broadcasting the increased quantity of location-related information using the wireless access type and based on the first request.

While some of the techniques, processes, and/or implementations presented herein may comply with all or part of one or more standards, such techniques, processes, and/or implementations may not, in some embodiments, comply with part or all of such one or more standards.

In view of this description embodiments may include different combinations of features. Implementation examples are described in the following numbered clauses:
Clause 1. A method performed by a user equipment (UE) for supporting sidelink positioning of the UE, comprising: detecting one or more sidelink UEs that are available for sidelink positioning; determining a synchronization reference of each of the one or more sidelink UEs; and selecting sidelink UEs for the sidelink positioning based on the synchronization reference associated with each of the one or more sidelink UEs.
Clause 2. The method of clause 1, wherein selecting the sidelink UEs for the sidelink positioning based on the synchronization reference associated with each of the one or more sidelink UEs comprises selecting sidelink UEs that have a common synchronization reference with a higher priority than sidelink UEs that have different synchronization references.
Clause 3. The method of clause 2, further comprising performing sidelink positioning with the selected sidelink UEs, comprising: performing first positioning measurements for a first set of sidelink UEs that have the common synchronization reference; and performing second positioning measurements for a second set of sidelink UEs that have a second common synchronization reference after finishing the first positioning measurements.
Clause 4. The method of any of clauses 1-3, wherein selecting the sidelink UEs for the sidelink positioning based on the synchronization reference associated with each of the one or more sidelink UEs is based on measurement priority levels associated with different types of synchronization references.
Clause 5. The method of clause 4, wherein the measurement priority levels are defined by priority levels for sidelink data transmission.
Clause 6. The method of clause 4, wherein the measurement priority levels are different for different positioning methods.
Clause 7. The method of any of clauses 1-6, further comprising: receiving a synchronization reference source with positioning measurements from each of the sidelink UEs; and determining an estimated position of the UE based at least in part on the positioning measurements and the synchronization reference source for each of the sidelink UEs.
Clause 8. The method of any of clauses 1-7, further comprising: determining a synchronization quality for each of the selected sidelink UEs; and selecting a positioning method for the sidelink positioning with the sidelink UEs based on the synchronization quality for each of the sidelink UEs.
Clause 9. A user equipment (UE) configured for supporting sidelink positioning of the UE, comprising: a wireless transceiver configured to communicate with entities in a wireless network; at least one memory; and at least one processor coupled to the wireless transceiver and the at least one memory, wherein the at least one processor is configured to: detect, via the wireless transceiver, one or more sidelink UEs that are available for sidelink positioning; determine, via the wireless transceiver, a synchronization reference of each of the one or more sidelink UEs; and select sidelink UEs for the sidelink positioning based on the synchronization reference associated with each of the one or more sidelink UEs.
Clause 10. The UE of clause 9, wherein the at least one processor is configured to select the sidelink UEs for the sidelink positioning based on the synchronization reference associated with each of the one or more sidelink UEs by being configured to select sidelink UEs that have a common synchronization reference with a higher priority than sidelink UEs that have different synchronization references.
Clause 11. The UE of clause 10, wherein the at least one processor is further configured to perform sidelink positioning with the selected sidelink UEs, by being configured to: perform, via the wireless transceiver, first positioning measurements for a first set of sidelink UEs that have the common synchronization reference; and perform, via the wireless transceiver, second positioning measurements for a second set of sidelink UEs that have a second common synchronization reference after finishing the first positioning measurements.
Clause 12. The UE of any of clauses 9-11, wherein the at least one processor is configured to select the sidelink UEs for the sidelink positioning based on the synchronization reference associated with each of the one or more sidelink UEs based on measurement priority levels associated with different types of synchronization references.
Clause 13. The UE of clause 12, wherein the measurement priority levels are defined by priority levels for sidelink data transmission.
Clause 14. The UE of clause 12, wherein the measurement priority levels are different for different positioning methods.
Clause 15. The UE of any of clauses 9-14, wherein the at least one processor is further configured to: receive, via the wireless transceiver, a synchronization reference source with positioning measurements from each of the sidelink UEs; and determine an estimated position of the UE based at least in part on the positioning measurements and the synchronization reference source for each of the sidelink UEs.
Clause 16. The UE of any of clauses 9-15, wherein the at least one processor is further configured to: determine a synchronization quality for each of the selected sidelink UEs; and select a positioning method for the sidelink positioning with the sidelink UEs based on the synchronization quality for each of the sidelink UEs.
Clause 17. A user equipment (UE) configured for supporting sidelink positioning of the UE, comprising: means for detecting one or more sidelink UEs that are available for sidelink positioning; means for determining a synchronization reference of each of the one or more sidelink UEs; and means for selecting sidelink UEs for the sidelink positioning based on the synchronization reference associated with each of the one or more sidelink UEs.
Clause 18. The UE of clause 17, wherein the means for selecting the sidelink UEs for the sidelink positioning based on the synchronization reference associated with each of the one or more sidelink UEs comprises means for selecting sidelink UEs that have a common synchronization reference with a higher priority than sidelink UEs that have different synchronization references.
Clause 19. The UE of clause 18, further comprising means for performing sidelink positioning with the selected sidelink UEs, comprising: means for performing first positioning measurements for a first set of sidelink UEs that have the common synchronization reference; and means for performing second positioning measurements for a second set of sidelink UEs that have a second common synchronization reference after finishing the first positioning measurements.
Clause 20. The UE of any of clauses 17-19, wherein the means for selecting the sidelink UEs for the sidelink positioning based on the synchronization reference associated with each of the one or more sidelink UEs uses measurement priority levels associated with different types of synchronization references.
Clause 21. The UE of clause 20, wherein the measurement priority levels are defined by priority levels for sidelink data transmission.
Clause 22. The UE of clause 20, wherein the measurement priority levels are different for different positioning methods.
Clause 23. The UE of any of clauses 17-22, further comprising: means for receiving a synchronization reference source with positioning measurements from each of the sidelink UEs; and means for determining an estimated position of the UE based at least in part on the positioning measurements and the synchronization reference source for each of the sidelink UEs.
Clause 24. The UE of any of clauses 17-23, further comprising: means for determining a synchronization quality for each of the selected sidelink UEs; and means for selecting a positioning method for the sidelink positioning with the sidelink UEs based on the synchronization quality for each of the sidelink UEs.
Clause 25. A non-transitory storage medium including program code stored thereon, the program code is operable to configure at least one processor in a user equipment (UE) for supporting sidelink positioning of the UE, the program code comprising instructions to: detect one or more sidelink UEs that are available for sidelink positioning; determine a synchronization reference of each of the one or more sidelink UEs; and select sidelink UEs for the sidelink positioning based on the synchronization reference associated with each of the one or more sidelink UEs.
Clause 26. The non-transitory storage medium of clause 25, wherein the instructions to select the sidelink UEs for the sidelink positioning based on the synchronization reference associated with each of the one or more sidelink UEs comprise instructions to select sidelink UEs that have a common synchronization reference with a higher priority than sidelink UEs that have different synchronization references.
Clause 27. The non-transitory storage medium of clause 26, wherein the program code further comprises instructions to perform sidelink positioning with the selected sidelink UEs, comprising instruction to: perform first positioning measurements for a first set of sidelink UEs that have the common synchronization reference; and perform second positioning measurements for a second set of sidelink UEs that have a second common synchronization reference after finishing the first positioning measurements.
Clause 28. The non-transitory storage medium of any of clauses 25-27, wherein the instructions to select the sidelink UEs for the sidelink positioning based on the synchronization reference associated with each of the one or more sidelink UEs is based on measurement priority levels associated with different types of synchronization references.
Clause 29. The non-transitory storage medium of clause 28, wherein the measurement priority levels are defined by priority levels for sidelink data transmission.
Clause 30. The non-transitory storage medium of clause 28, wherein the measurement priority levels are different for different positioning methods.
Clause 31. The non-transitory storage medium of any of clauses 25-30, wherein program code further comprises instructions to: receive a synchronization reference source with positioning measurements from each of the sidelink UEs; and determine an estimated position of the UE based at least in part on the positioning measurements and the synchronization reference source for each of the sidelink UEs.
Clause 32. The non-transitory storage medium of any of clauses 25-31, wherein program code further comprises instructions to: determine a synchronization quality for each of the selected sidelink UEs; and select a positioning method for the sidelink positioning with the sidelink UEs based on the synchronization quality for each of the sidelink UEs.
Clause 33. A method performed by a user equipment (UE) for supporting sidelink positioning of the UE, comprising: detecting one or more sidelink UEs that are available for sidelink positioning, wherein each sidelink UE is synchronized with a synchronization source; determining a synchronization quality for each of the one or more sidelink UEs; and selecting a positioning method for the sidelink positioning with the one or more sidelink UEs based on the synchronization quality for each of the one or more sidelink UEs.
Clause 34. The method of clause 33, wherein the synchronization quality for the positioning method is different than a synchronization quality requirement for sidelink data transfer.
Clause 35. The method of any of clauses 33-34, wherein the UE is the synchronization source of one or more of the one or more sidelink UEs, and determining the synchronization quality for each of the one or more sidelink UEs comprises: transmitting reference signals to each of the one or more sidelink UEs; and receiving a report of a signal strength measurement or a synchronization quality measurement, or a time or arrival (TOA) measurement quality of the reference signals from each of the one or more sidelink UEs.
Clause 36. The method of any of clauses 33-35, wherein selecting the positioning method for the sidelink positioning with the one or more sidelink UEs based on the synchronization quality for each of the one or more sidelink UEs comprises: selecting a first positioning method for the sidelink positioning if each of the one or more sidelink UEs have a synchronization quality that is within a first range required for the first positioning method; and selecting a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
Clause 37. The method of clause 36, wherein the first positioning method is a time synchronization sensitive positioning method, and the second positioning method is less time synchronization sensitive than the first positioning method.
Clause 38. The method of clause 36, further comprising selecting a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
Clause 39. The method of clause 38, wherein the first positioning method comprises a time difference of arrival positioning technique, the second positioning method comprises a round trip time positioning technique, and the third positioning method comprises an angle based positioning technique.
Clause 40. A user equipment (UE) configured for supporting sidelink positioning of the UE, comprising: a wireless transceiver configured to communicate with entities in a wireless network; at least one memory; and at least one processor coupled to the wireless transceiver and the at least one memory, wherein the at least one processor is configured to: detect one or more sidelink UEs that are available for sidelink positioning, wherein each sidelink UE is synchronized with a synchronization source; determine a synchronization quality for each of the one or more sidelink UEs; and select a positioning method for the sidelink positioning with the one or more sidelink UEs based on the synchronization quality for each of the one or more sidelink UEs.
Clause 41. The UE of clause 40, wherein the synchronization quality for the positioning method is different than a synchronization quality requirement for sidelink data transfer.
Clause 42. The UE of any of clauses 40-41, wherein the UE is the synchronization source of one or more of the one or more sidelink UEs, and the at least one processor is configured to determine the synchronization quality for each of the one or more sidelink UEs by being configured to: transmit reference signals to each of the one or more sidelink UEs; and receive a report of a signal strength measurement or a synchronization quality measurement, or a time or arrival (TOA) measurement quality of the reference signals from each of the one or more sidelink UEs.
Clause 43. The UE of any of clauses 40-42, wherein the at least one processor is configured to select the positioning method for the sidelink positioning with the one or more sidelink UEs based on the synchronization quality for each of the one or more sidelink UEs by being configured to: select a first positioning method for the sidelink positioning if each of the one or more sidelink UEs have a synchronization quality that is within a first range required for the first positioning method; and select a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
Clause 44. The UE of clause 43, wherein the first positioning method is a time synchronization sensitive positioning method, and the second positioning method is less time synchronization sensitive than the first positioning method.
Clause 45. The UE of clause 43, wherein the at least one processor is further configured to select a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
Clause 46. The UE of clause 45, wherein the first positioning method comprises a time difference of arrival positioning technique, the second positioning method comprises a round trip time positioning technique, and the third positioning method comprises an angle based positioning technique.
Clause 47. A user equipment (UE) configured for supporting sidelink positioning of the UE, comprising: means for detecting one or more sidelink UEs that are available for sidelink positioning, wherein each sidelink UE is synchronized with a synchronization source; means for determining a synchronization quality for each of the one or more sidelink UEs; and means for selecting a positioning method for the sidelink positioning with the one or more sidelink UEs based on the synchronization quality for each of the one or more sidelink UEs.
Clause 48. The UE of clause 47, wherein the synchronization quality for the positioning method is different than a synchronization quality requirement for sidelink data transfer.
Clause 49. The UE of any of clauses 47-48, wherein the UE is the synchronization source of one or more of the one or more sidelink UEs, and the means for determining the synchronization quality for each of the one or more sidelink UEs comprises: means for transmitting reference signals to each of the one or more sidelink UEs; and means for receiving a report of a signal strength measurement or a synchronization quality measurement, or a time or arrival (TOA) measurement quality of the reference signals from each of the one or more sidelink UEs.
Clause 50. The UE of any of clauses 47-50, wherein the means for selecting the positioning method for the sidelink positioning with the one or more sidelink UEs based on the synchronization quality for each of the one or more sidelink UEs comprises: means for selecting a first positioning method for the sidelink positioning if each of the one or more sidelink UEs have a synchronization quality that is within a first range required for the first positioning method; and means for selecting a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
Clause 51. The UE of clause 50, wherein the first positioning method is a time synchronization sensitive positioning method, and the second positioning method is less time synchronization sensitive than the first positioning method.
Clause 52. The UE of clause 50, further comprising means for selecting a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
Clause 53. The UE of clause 52, wherein the first positioning method comprises a time difference of arrival positioning technique, the second positioning method comprises a round trip time positioning technique, and the third positioning method comprises an angle based positioning technique.
Clause 54. A non-transitory storage medium including program code stored thereon, the program code is operable to configure at least one processor in a user equipment (UE) for supporting sidelink positioning of the UE, the program code comprising instructions to: detect one or more sidelink UEs that are available for sidelink positioning, wherein each sidelink UE is synchronized with a synchronization source; determine a synchronization quality for each of the one or more sidelink UEs; and select a positioning method for the sidelink positioning with the one or more sidelink UEs based on the synchronization quality for each of the one or more sidelink UEs.
Clause 55. The non-transitory storage medium of clause 54, wherein the synchronization quality for the positioning method is different than a synchronization quality requirement for sidelink data transfer.
Clause 56. The non-transitory storage medium of any of clauses 54-55, wherein the UE is the synchronization source of one or more of the one or more sidelink UEs, and the program code comprises instructions to determine the synchronization quality for each of the one or more sidelink UEs including instructions to: transmit reference signals to each of the one or more sidelink UEs; and receive a report of a signal strength measurement or a synchronization quality measurement, or a time or arrival (TOA) measurement quality of the reference signals from each of the one or more sidelink UEs.
Clause 57. The non-transitory storage medium of any of clauses 54-56, wherein the program code comprises instructions to select the positioning method for the sidelink positioning with the one or more sidelink UEs based on the synchronization quality for each of the one or more sidelink UEs comprising instructions to: select a first positioning method for the sidelink positioning if each of the one or more sidelink UEs have a synchronization quality that is within a first range required for the first positioning method; and select a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
Clause 58. The non-transitory storage medium of clause 57, wherein the first positioning method is a time synchronization sensitive positioning method, and the second positioning method is less time synchronization sensitive than the first positioning method.
Clause 59. The non-transitory storage medium of clause 57, wherein program code further comprises instructions to select a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
Clause 60. The non-transitory storage medium of clause 59, wherein the first positioning method comprises a time difference of arrival positioning technique, the second positioning method comprises a round trip time positioning technique, and the third positioning method comprises an angle based positioning technique.

Although particular embodiments have been disclosed herein in detail, this has been done by way of example for purposes of illustration only, and is not intended to be limiting with respect to the scope of the appended claims, which follow. In particular, it is contemplated that various substitutions, alterations, and modifications may be made without departing from the spirit and scope of the disclosure as defined by the claims. Other aspects, advantages, and modifications are considered to be within the scope of the following claims. The claims presented are representative of the embodiments and features disclosed herein. Other unclaimed embodiments and features are also contemplated. Accordingly, other embodiments are within the scope of the following claims.
Embodiments of the invention can be described with reference to the following numbered clauses, with preferred features laid out in the dependent clauses:
1. A method performed by a user equipment (UE) for supporting sidelink positioning of the UE, comprising:
   detecting one or more sidelink UEs that are available for sidelink positioning;
   determining a synchronization reference of each of the one or more sidelink UEs; and
   selecting sidelink UEs for the sidelink positioning based on the synchronization reference associated with each of the one or more sidelink UEs.
2. The method of clause 1, wherein selecting the sidelink UEs for the sidelink positioning based on the synchronization reference associated with each of the one or more sidelink UEs comprises selecting sidelink UEs that have a common synchronization reference with a higher priority than sidelink UEs that have different synchronization references.
3. The method of clause 2, further comprising performing sidelink positioning with the selected sidelink UEs, comprising:
   performing first positioning measurements for a first set of sidelink UEs that have the common synchronization reference; and
   performing second positioning measurements for a second set of sidelink UEs that have a second common synchronization reference after finishing the first positioning measurements.
4. The method of clause 1, wherein selecting the sidelink UEs for the sidelink positioning based on the synchronization reference associated with each of the one or more sidelink UEs is based on measurement priority levels associated with different types of synchronization references.
5. The method of clause 4, wherein the measurement priority levels are defined by priority levels for sidelink data transmission.
6. The method of clause 4, wherein the measurement priority levels are different for different positioning methods.
7. The method of clause 1, further comprising:
   receiving a synchronization reference source with positioning measurements from each of the sidelink UEs; and
   determining an estimated position of the UE based at least in part on the positioning measurements and the synchronization reference source for each of the sidelink UEs.
8. The method of clause 1, further comprising:
   determining a synchronization quality for each of the selected sidelink UEs; and
   selecting a positioning method for the sidelink positioning with the sidelink UEs based on the synchronization quality for each of the sidelink UEs.
9. A user equipment (UE) configured for supporting sidelink positioning of the UE, comprising:
   a wireless transceiver configured to communicate with entities in a wireless network;
   at least one memory; and
   at least one processor coupled to the wireless transceiver and the at least one memory, wherein the at least one processor is configured to:
      detect, via the wireless transceiver, one or more sidelink UEs that are available for sidelink positioning;
      determine, via the wireless transceiver, a synchronization reference of each of the one or more sidelink UEs; and
      select sidelink UEs for the sidelink positioning based on the synchronization reference associated with each of the one or more sidelink UEs.
10. The UE of clause 9, wherein the at least one processor is configured to select the sidelink UEs for the sidelink positioning based on the synchronization reference associated with each of the one or more sidelink UEs by being configured to select sidelink UEs that have a common synchronization reference with a higher priority than sidelink UEs that have different synchronization references.
11. The UE of clause 10, wherein the at least one processor is further configured to perform sidelink positioning with the selected sidelink UEs, by being configured to:
   perform, via the wireless transceiver, first positioning measurements for a first set of sidelink UEs that have the common synchronization reference; and
   perform, via the wireless transceiver, second positioning measurements for a second set of sidelink UEs that have a second common synchronization reference after finishing the first positioning measurements.
12. The UE of clause 9, wherein the at least one processor is configured to select the sidelink UEs for the sidelink positioning based on the synchronization reference associated with each of the one or more sidelink UEs based on measurement priority levels associated with different types of synchronization references.
13. The UE of clause 12, wherein the measurement priority levels are defined by priority levels for sidelink data transmission.
14. The UE of clause 12, wherein the measurement priority levels are different for different positioning methods.
15. The UE of clause 9, wherein the at least one processor is further configured to:
   receive, via the wireless transceiver, a synchronization reference source with positioning measurements from each of the sidelink UEs; and
   determine an estimated position of the UE based at least in part on the positioning measurements and the synchronization reference source for each of the sidelink UEs.
16. The UE of clause 9, wherein the at least one processor is further configured to:
   determine a synchronization quality for each of the selected sidelink UEs; and
   select a positioning method for the sidelink positioning with the sidelink UEs based on the synchronization quality for each of the sidelink UEs.
17. A method performed by a user equipment (UE) for supporting sidelink positioning of the UE, comprising:
   detecting one or more sidelink UEs that are available for sidelink positioning, wherein each sidelink UE is synchronized with a synchronization source;
   determining a synchronization quality for each of the one or more sidelink UEs; and
   selecting a positioning method for the sidelink positioning with the one or more sidelink UEs based on the synchronization quality for each of the one or more sidelink UEs.
18. The method of clause 17, wherein the synchronization quality for the positioning method is different than a synchronization quality requirement for sidelink data transfer.
19. The method of clause 17, wherein the UE is the synchronization source of the one or more sidelink UEs, and determining the synchronization quality for each of the one or more sidelink UEs comprises:
   transmitting reference signals to each of the one or more sidelink UEs; and
   receiving a report of a signal strength measurement or a synchronization quality measurement, or a time or arrival (TOA) measurement quality of the reference signals from each of the one or more sidelink UEs.
20. The method of clause 17, wherein selecting the positioning method for the sidelink positioning with the one or more sidelink UEs based on the synchronization quality for each of the one or more sidelink UEs comprises:
   selecting a first positioning method for the sidelink positioning if each of the one or more sidelink UEs have a synchronization quality that is within a first range required for the first positioning method; and
   selecting a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
21. The method of clause 20, wherein the first positioning method is a time synchronization sensitive positioning method, and the second positioning method is less time synchronization sensitive than the first positioning method.
22. The method of clause 20, further comprising selecting a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
23. The method of clause 22, wherein the first positioning method comprises a time difference of arrival positioning technique, the second positioning method comprises a round trip time positioning technique, and the third positioning method comprises an angle based positioning technique.
24. A user equipment (UE) configured for supporting sidelink positioning of the UE, comprising:
   a wireless transceiver configured to communicate with entities in a wireless network;
   at least one memory; and
   at least one processor coupled to the wireless transceiver and the at least one memory, wherein the at least one processor is configured to:
      detect one or more sidelink UEs that are available for sidelink positioning, wherein each sidelink UE is synchronized with a synchronization source;
      determine a synchronization quality for each of the one or more sidelink UEs; and
      select a positioning method for the sidelink positioning with the one or more sidelink UEs based on the synchronization quality for each of the one or more sidelink UEs.
25. The UE of clause 24, wherein the synchronization quality for the positioning method is different than a synchronization quality requirement for sidelink data transfer.
26. The UE of clause 24, wherein the UE is the synchronization source of the one or more sidelink UEs, and the at least one processor is configured to determine the synchronization quality for each of the one or more sidelink UEs by being configured to:
   transmit reference signals to each of the one or more sidelink UEs; and
   receive a report of a signal strength measurement or a synchronization quality measurement, or a time or arrival (TOA) measurement quality of the reference signals from each of the one or more sidelink UEs.
27. The UE of clause 24, wherein the at least one processor is configured to select the positioning method for the sidelink positioning with the one or more sidelink UEs based on the synchronization quality for each of the one or more sidelink UEs by being configured to:
   select a first positioning method for the sidelink positioning if each of the one or more sidelink UEs have a synchronization quality that is within a first range required for the first positioning method; and
   select a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.
28. The UE of clause 27, wherein the first positioning method is a time synchronization sensitive positioning method, and the second positioning method is less time synchronization sensitive than the first positioning method.
29. The UE of clause 27, wherein the at least one processor is further configured to select a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.
30. The UE of clause 29, wherein the first positioning method comprises a time difference of arrival positioning technique, the second positioning method comprises a round trip time positioning technique, and the third positioning method comprises an angle based positioning technique.

## Claims

1. A method performed by a user equipment (UE) for supporting sidelink positioning of the UE, comprising:
detecting one or more sidelink UEs that are available for sidelink positioning, wherein each sidelink UE is synchronized with a synchronization source;
determining a synchronization quality for each of the one or more sidelink UEs; and
selecting a positioning method for the sidelink positioning with the one or more sidelink UEs based on the synchronization quality for each of the one or more sidelink UEs.

2. The method of claim 1, wherein the synchronization quality for the positioning method is different than a synchronization quality requirement for sidelink data transfer.

3. The method of claim 1, wherein the UE is the synchronization source of the one or more sidelink UEs, and determining the synchronization quality for each of the one or more sidelink UEs comprises:
transmitting reference signals to each of the one or more sidelink UEs; and
receiving a report of a signal strength measurement or a synchronization quality measurement, or a time or arrival (TOA) measurement quality of the reference signals from each of the one or more sidelink UEs.

4. The method of claim 1, wherein selecting the positioning method for the sidelink positioning with the one or more sidelink UEs based on the synchronization quality for each of the one or more sidelink UEs comprises:
selecting a first positioning method for the sidelink positioning if each of the one or more sidelink UEs have a synchronization quality that is within a first range required for the first positioning method; and
selecting a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.

5. The method of claim 4, wherein the first positioning method is a time synchronization sensitive positioning method, and the second positioning method is less time synchronization sensitive than the first positioning method.

6. The method of claim 4, further comprising selecting a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.

7. The method of claim 6, wherein the first positioning method comprises a time difference of arrival positioning technique, the second positioning method comprises a round trip time positioning technique, and the third positioning method comprises an angle based positioning technique.

8. A user equipment (UE) configured for supporting sidelink positioning of the UE, comprising:
a wireless transceiver configured to communicate with entities in a wireless network;
at least one memory; and
at least one processor coupled to the wireless transceiver and the at least one memory, wherein the at least one processor is configured to:
detect one or more sidelink UEs that are available for sidelink positioning, wherein each sidelink UE is synchronized with a synchronization source;
determine a synchronization quality for each of the one or more sidelink UEs; and
select a positioning method for the sidelink positioning with the one or more sidelink UEs based on the synchronization quality for each of the one or more sidelink UEs.

9. The UE of claim 8, wherein the synchronization quality for the positioning method is different than a synchronization quality requirement for sidelink data transfer.

10. The UE of claim 8, wherein the UE is the synchronization source of the one or more sidelink UEs, and the at least one processor is configured to determine the synchronization quality for each of the one or more sidelink UEs by being configured to:
transmit reference signals to each of the one or more sidelink UEs; and
receive a report of a signal strength measurement or a synchronization quality measurement, or a time or arrival (TOA) measurement quality of the reference signals from each of the one or more sidelink UEs.

11. The UE of claim 8, wherein the at least one processor is configured to select the positioning method for the sidelink positioning with the one or more sidelink UEs based on the synchronization quality for each of the one or more sidelink UEs by being configured to:
select a first positioning method for the sidelink positioning if each of the one or more sidelink UEs have a synchronization quality that is within a first range required for the first positioning method; and
select a second positioning method for the sidelink positioning if at least one of the one or more sidelink UEs has a synchronization quality that is outside the first range required for the first positioning method and each of the one or more sidelink UEs have a synchronization quality that is within a second range required for the second positioning method.

12. The UE of claim 11, wherein the first positioning method is a time synchronization sensitive positioning method, and the second positioning method is less time synchronization sensitive than the first positioning method.

13. The UE of claim 11, wherein the at least one processor is further configured to select a third positioning method for the sidelink positioning if at least one of the one or more sidelink UEs has a synchronization quality that is outside the first range required for the first positioning method and the second range required for the second positioning method and each of the one or more sidelink UEs have the synchronization quality that is within a third range required for the third positioning method.

14. The UE of claim 13, wherein the first positioning method comprises a time difference of arrival positioning technique, the second positioning method comprises a round trip time positioning technique, and the third positioning method comprises an angle based positioning technique.
